(19) Europäisches Patentamt
European Patent Office
Office européen des brevets

(11) **EP 3 868 815 A1**

(12) **EUROPEAN PATENT APPLICATION**
published in accordance with Art. 153(4) EPC

(43) Date of publication:
**25.08.2021 Bulletin 2021/34**

(21) Application number: **19872626.7**

(22) Date of filing: **10.10.2019**

(51) Int Cl.:
*C08J 5/24* (2006.01)     *C08G 59/42* (2006.01)
*C08K 5/1539* (2006.01)     *C08K 7/02* (2006.01)
*C08L 63/00* (2006.01)

(86) International application number:
**PCT/JP2019/039940**

(87) International publication number:
**WO 2020/080240 (23.04.2020 Gazette 2020/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.10.2018   JP 2018195255**

(71) Applicant: **Mitsubishi Chemical Corporation
Chiyoda-ku
Tokyo 100-8251 (JP)**

(72) Inventors:
• **OGASAWARA, Hayato
  Tokyo 100-8251 (JP)**
• **OOTA, Akira
  Tokyo 100-8251 (JP)**
• **MURANO, Yasunori
  Tokyo 100-8251 (JP)**

(74) Representative: **Hoffmann Eitle
Patent- und Rechtsanwälte PartmbB
Arabellastraße 30
81925 München (DE)**

(54) **SHEET MOLDING COMPOUND AND MOLDED ARTICLE**

(57)     Provided are a sheet molding compound having good handleability and good reinforcing fiber filling properties; and a molded article having good mechanical properties and good heat resistance.

The sheet molding compound comprises a thermosetting resin composition and reinforcing fiber bundles, in which the thermosetting resin composition comprises an epoxy resin component (E) comprising a reaction product (1) of the following component (A) and the following component (B), and the following component (C). The molded article is an article obtained by press-molding the sheet molding compound.

**EP 3 868 815 A1**

**Description**

[Technical Field]

The present invention relates to a sheet molding compound and a molded article.
Priority is claimed on Japanese Patent Application No. 2018-195255 filed on October 16, 2018, the content of which is incorporated herein by reference.

[Background Art]

Fiber-reinforced composites are easy to process, noncorrosive, and lightweight as plastics and, further, have good mechanical strength. Therefore, they are widely used for members for electrical equipment and electronic equipment, building materials, members for vehicles, and the like. The fiber-reinforced composites are manufactured, for example, by a method of laminating prepreg obtained by preliminarily impregnating a reinforcing fiber substrate consisting of continuous fibers with a matrix resin and curing the prepreg by heating.
The prepreg contains continuous fibers. Therefore, even when the matrix resin melts, it is difficult for the prepreg to conform to complicated shapes such as small bumps and dents. Therefore, for the manufacturing of a fiber-reinforced composite having a complicated shape, a sheet molding compound (hereinafter, referred to as "SMC") obtained by preliminarily impregnating reinforcing fibers cut to a certain length with a matrix resin is suitable. The SMC contains cut reinforcing fibers. Therefore, the reinforcing fibers and the resin easily flow in a die by being heated at the time of molding , resulting in advantages of easily conforming to complicated shapes such as small bumps and dents.
As a matrix resin used in an SMC, a resin composition containing a thermosetting resin is frequently used because of good impregnation properties for the reinforcing fibers good heat resistance after curing. As the thermosetting resin, a phenol resin, a melamine resin, a bismaleimide resin, an unsaturated polyester resin, an epoxy resin, and the like are used. Among these, in view of low odor, moldability, heat resistance after curing, mechanical characteristics, and low VOC content, an epoxy resin is suitably used.
As thermosetting epoxy resin compositions, the following compositions have been suggested.

- Liquid adhesive comprising an epoxy resin, a curing agent activated at a temperature of 20 °C to 100 °C, and a curing agent activated at a temperature of 100 °C to 200 °C (Patent Document 1).
- Epoxy resin composition comprising an epoxy resin, an acid anhydride, and a Lewis acid salt (boron trichloride amine complex) (Patent Documents 2 to 4).

[Citation List]

[Patent Document]

[Patent Document 1]
Japanese Unexamined Patent Application, First Publication No. H2-88684
[Patent Document 2]
Japanese Unexamined Patent Application, First Publication No. 2004-189811
[Patent Document 3]
Japanese Unexamined Patent Application, First Publication No. 2004-43769
[Patent Document 4]
Japanese Unexamined Patent Application, First Publication No. 2001-354788

[Summary of Invention]

[Technical Problem]

At the time of manufacturing an SMC, in view of impregnation properties for reinforcing fibers, the matrix resin is required to be in a low viscosity liquid state. Meanwhile, in view of handleability at the time of molding an SMC, the matrix resin is required to appropriately thicken after impregnation of the reinforcing fibers, so that the SMC has both appropriate tackiness (stickiness) and appropriate draping properties (flexibility). Therefore, in a case where the matrix resin is a liquid, if the thickening after the fabrication is not sufficient, the SMC may possibly not have appropriate tackiness but exhibit high stickiness.

In addition, at the time of press-molding of an SMC using a die, in view of obtaining a molded article having good mechanical properties and good heat resistance, the SMC is required to enable the die having complicated shapes to be fully filled with the reinforcing fibers and to enable the suppression of burr formation (reinforcing fiber filling properties).

However, because the liquid adhesive in Patent Document 1 uses a curing agent (polyamine or the like) activated at a temperature of 20 °C to 100 °C, this adhesive reach gel state in a first stage curing reaction and exhibits an excessively high viscosity after the first stage curing reaction. Therefore, this adhesive is not easy to shape before second stage curing and does not have appropriate draping properties and sufficient handleability.

The epoxy resins in Patent Documents 2 to 4 take a long time to shift to the B stage (a state where the epoxy resin has thickened due to semi-curing and can be melted and fluidized by being heated) at room temperature. Furthermore, these epoxy resins exhibit low viscosity after shifting to the B stage at room temperature and have an excessively high stickiness. Therefore, these resins do not have appropriate tackiness, and handleability thereof is insufficient.

In addition, in Patent Documents 1 to 4, the reinforcing fiber filling properties at the time of molding of an SMC have not been examined.

An object of the present invention is to provide an SMC having good handleability and good reinforcing fiber filling properties; and a molded article having good mechanical properties and good heat resistance.

[Solution to Problem]

As a result of intensive studies, the inventors of the present invention have found that, when a specific reaction product of a reaction between a liquid epoxy resin and a specific polymer is blended as an epoxy resin component into a matrix resin, an SMC having good handleability and good reinforcing fiber filling properties is obtained.

The present invention has the following aspects.

[1] A sheet molding compound comprising a thermosetting resin composition and reinforcing fiber bundles, wherein the thermosetting resin composition comprises an epoxy resin component (E) comprising a reaction product (1) of the following component (A) and the following component (B), and the following component (C).

Component (A): an epoxy resin staying in a liquid state at 25 °C.
Component (B): a polymer comprising a functional group reactive with the component (A).
Component (C): an epoxy curing agent.

[2] The sheet molding compound described in [1], wherein an epoxy equivalent of the epoxy resin component (E) is 500 or less.

[3] The sheet molding compound described in [1] or [2], wherein a value obtained by dividing an epoxy equivalent of the component (A) by an epoxy equivalent of the epoxy resin component (E) is 0.5 to 0.95.

[4] The sheet molding compound described in any one of [1] to [3], wherein the functional group is an acid anhydride group.

[5] The sheet molding compound described in any one of [1] to [4], wherein an acid value of the component (B) is 100 to 700 mg KOH/g.

[6] The sheet molding compound described in any one of [1] to [5], wherein a mass average molecular weight of the component (B) is 1,000 to 15,000.

[7] The sheet molding compound described in any one of [1] to [6], wherein the component (B) comprises a copolymer comprising a vinyl compound-based unit and an ethylenically unsaturated acid anhydride-based unit and having two or more acid anhydride groups per molecule.

[8] The sheet molding compound described in [7], wherein the component (B) is a styrene-maleic anhydride copolymer in which a ratio of the maleic anhydride to the styrene (maleic anhydride/styrene) is 1/8 to 1/1.

[9] The sheet molding compound described in any one of [1] to [8], wherin the epoxy resin component (E) further comprises a reaction product (2) of the component (A), the component (B), and the following component (D).

Component (D): a liquid monofunctional acid anhydride having one acid anhydride group in a molecule.

[10] The sheet molding compound described in [9], wherein the component (D) is a compound capable of dissolving the component (B).

[11] The sheet molding compound described in any one of [1] to [10], wherein a ratio of a gram equivalent number of acid groups in the component (B) to a gram equivalent number of epoxy groups in the component (A) is 0.005 to 0.08.

[12] The sheet molding compound described in any one of [9] to [11], in which a ratio of a total of gram equivalent number of acid groups in the component (B) and gram equivalent number of acid groups in the component (D) to a gram equivalent number of epoxy groups in the component (A) is 0.1 to 0.5.

[13] A sheet molding compound comprising a thermosetting resin composition and reinforcing fiber bundles, wherein, in a case where a curing start temperature of the thermosetting resin composition is 70 °C or higher and lower than 100 °C, the thermosetting resin composition satisfies the following requirements (i) and (ii), and in a case where a curing start temperature of the thermosetting resin composition is 100 °C or higher, the thermosetting resin composition satisfies the following requirements (i), (ii), and (iii).

Requirement (i): an aged viscosity at 25 °C is 5,000 to 90,000 Pa·s.
Requirement (ii): a melt viscosity at 70 °C is 15 Pa·s or higher.
Requirement (iii): a melt viscosity at 100 °C is 1 Pa·s or higher.

[14] The sheet molding compound described in [13], in which the thermosetting resin composition further satisfies the following requirement (iv).
Requirement (iv): a minimum viscosity is 0.5 Pa·s or higher.
[15] A molded article which is an article obtained by press-molding the sheet molding compound described in any one of [1] to [14].

[Advantageous Effects of Invention]

An SMC of the present invention has good handleability and good reinforcing fiber filling properties.
The molded article of the present invention has good mechanical properties and good heat resistance.

[Description of Embodiments]

In the present specification, the following terms have the following meanings.
"Staying in a liquid state at 25 °C" means that a substance stays in a liquid state under the conditions of 25 °C and 1 atm.
"Epoxy resin" is a compound having two or more epoxy groups in a molecule.
"Epoxy equivalent" is a value measured according to JIS K-7236: 2001. For example, the epoxy equivalent is equivalent to a molecular weight per epoxy group in an epoxy resin.
"Acid anhydride group" is a group having a structure formed in a case where one water molecule is removed from two acid groups (carboxy groups and the like).
"Acid anhydride" is a compound having an acid anhydride group.
"Acid equivalent" is equivalent, for example, to a molecular weight per acid group in a compound.
Unless otherwise specified, "acid value" means a value calculated by neutralization titration.
"Viscosity" is a value measured using a rheometer under the conditions of measurement mode: constant stress, level of stress: 300 Pa, frequency: 1.59 Hz, plate diameter: 25 mm, plate type: parallel plate, and plate gap: 0.5 mm.
"Aging" is an operation of leaving a mixture of components of a thermosetting resin composition to stand in an environment at 15 °C to 80 °C for 3 to 20 days. Furthermore, the period for which the mixture is left to stand is referred to as an "aging period", and the temperature at which the mixture is left to stand is referred to as an "aging temperature".
"Aged viscosity" is the viscosity measured at 25 °C for a thermosetting resin composition containing a specific preliminary reaction product.
"Melt viscosity" is the viscosity of a thermosetting resin composition containing a specific preliminary reaction product that is measured in a state where the composition is melted by heating.
"Minimum viscosity" is the viscosity at an inflection point where the melt viscosity of a molten thermosetting resin composition that has been decreasing starts to increase as the temperature of the composition increases.
"Curing start temperature" is the temperature of an SMC at which the melt viscosity of a molten thermosetting resin composition that has been decreasing starts to increase as the temperature of the composition increases.
"Melting point" is a value measured using a differential scanning calorimeter (for example, Q1000 manufactured by TA Instruments). Specifically, for example, a dedicated aluminum hermetic pan is filled with about 3 mg of a measurement sample, and the sample is heated to 300 °C from -50 °C at a heating rate of 10 °C/min, thereby obtaining data. The data is plotted on a graph in which the ordinate shows temperature and the abscissa shows heating value. In this graph, an inflection point where the base line of the heating value meets the peak top resulting from the endothermic reaction is taken as a melting point.
"Burr" means an unnecessary portion formed at the end of a molded article (press-molded SMC) due to flowing out of a molten SMC through a gap between upper and lower molding dies which is followed by solidification at the time of press molding of the SMC.
"Room temperature" means 25 °C.
"To" used to describe a range of numerical values means that the range includes numerical values listed before and after "to" as a lower limit and an upper limit.

<Sheet molding compound>

The sheet molding compound of the present invention (hereinafter referred to as "SMC") contains a thermosetting resin composition and reinforcing fiber bundles. The SMC is a sheet-like molding material, in which the reinforcing fiber bundles are impregnated with the thermosetting resin composition. Hereinafter, a first aspect and a second aspect of the SMC of the present invention will be described in order.

[First aspect]

(Thermosetting resin composition)

In the first aspect of the present invention, the thermosetting resin composition comprises a specific epoxy resin component (E) and the following component (C). The specific epoxy resin component (E) comprises a reaction product (1) of the following component (A) and the following component (B). The epoxy resin component (E) can also be said as a preliminary reaction product formed by a reaction between the following component (A) and at least a part of the following component (B). Furthermore, the thermosetting resin composition may further contain optional components which will be described later.

Component (A): an epoxy resin staying in a liquid state at 25 °C.
Component (B): a polymer comprising a functional group reactive with the component (A).
Component (C): an epoxy curing agent.

The epoxy resin component (E) comprises at least the reaction product (1). The reaction product (1) is a reaction product produced by the reaction between the component (A) and the component (B) which is a polymer comprising a functional group reactive with the component (A). Examples of the reaction product (1) include a reaction product produced by the reaction between some epoxy groups in the component (A) and the functional group in the component (B).

The functional group in the component (B) is not particularly limited as long as the functional group enables the component (A) and the component (B) to form a chemical bond with each other by reacting with an epoxy group. Examples of the functional group in the component (B) include an amino group, an isocyanate group and an acid anhydride group.

In a case where the component (A) has a functional group other than an epoxy group, the functional group in the component (B) may be a functional group reactive with the functional group in the component (A) other than the epoxy group. For example, in a case where the component (A) has a hydroxyl group like a bisphenol-type epoxy resin, a functional group reactive with a hydroxyl group such as an isocyanate group can be adopted as a functional group in the component (B).

As the functional group in the component (B), one kind of functional group may be used singly, or two or more kinds of functional groups may be used in combination. It is preferable to use an acid anhydride group as a functional group in the component (B), because such a functional group tends to allow reinforcing fibers to be impregnated better with a matrix resin at the time of manufacturing of the SMC, allow the matrix resin to thicken better after impregnation, and further improve the storage stability of the manufactured SMC.

The polymer of the component (B) is not particularly limited as long as it has a functional group reactive with the component (A). Examples of the polymer of the component (B) include a vinyl-based copolymer, a vinyl ester-based polymer, a polyolefin, a polyester and a polyamide.

As the polymer of the component (B), one kind of polymer may be used singly, or two or more kinds of polymers may be used in combination. It is preferable to use a vinyl-based copolymer as the polymer of the component (B), because such a copolymer has a wide choice of molecular weights and functional group amounts and particularly because such an copolymer allows an acid anhydride group to be easily introduced into the copolymer.

The epoxy resin component (E) may further contain a reaction product (2) of the component (A), the component (B), and the following component (D). In a case where the component (A), the component (B), and the component (D) are caused to react with one another, both the reaction product (1) and the reaction product (2) are produced.

Component (D): a liquid monofunctional acid anhydride having one acid anhydride group in a molecule.

In the epoxy resin component (E), each of the reaction product (1) and the reaction product (2) has an epoxy group. The epoxy group in the reaction product (1) and the reaction product (2) is an unreacted residual epoxy group derived from the component (A) and preferably a residual epoxy group that remain unreacted with an acid anhydride group.

The upper limit of an epoxy equivalent of the epoxy resin component (E) is preferably 500 or less, and more preferably 400 or less. In a case where the epoxy equivalent is preferably 500 or less, owing to sufficient amounts of residual epoxy groups reactive with the component (C) at the time of molding of the SMC, defective curing is prevented in obtaining a molded article, and also the SMC exhibits appropriate tackiness. When the epoxy equivalent of the epoxy resin component (E) is preferably 500 or less, the SMC of the present invention has good handleability.

The lower limit of the epoxy equivalent of the epoxy resin component (E) is preferably 100 or more, and more preferably 150 or more. In a case where the epoxy equivalent is preferably 100 or more, strong heat is not likely to be generated within a short time during reaction of the residual epoxy groups remaining in the epoxy resin component (E) with the component (C). Therefore, the curing reaction can proceed gently. As a result, the induction of an unintended curing reaction between the component (C) and the epoxy groups can be further inhibited. For this reason, in a case where the epoxy equivalent of the epoxy resin component (E) is preferably 100 or more, the SMC tends to have appropriate draping properties, and the handleability of the SMC is further improved.

For the aforementioned reasons, the epoxy equivalent of the epoxy resin component (E) is preferably 100 to 500, and more preferably 150 to 400. In the present specification, the lower limits and upper limits of the epoxy equivalent of the epoxy resin component (E) can be arbitrarily combined.

The epoxy equivalent of the epoxy resin component (E) can be expressed as a value obtained by dividing the total mass [g] of the component (A), the component (B), and as needed the component (D) by the gram equivalent number of epoxy groups in the epoxy resin component (E).

The gram equivalent number of the epoxy groups in the epoxy resin component (E) can be expressed as a value obtained by subtracting the total gram equivalent number of acid groups of the component (B) and as needed the component (D) from the gram equivalent number of epoxy groups in the component (A).

Examples of the component (A) include glycidyl ether of bisphenols (bisphenol A, bisphenol F, bisphenol AD, halogen-substituted bisphenols A, F, and AD, and the like); glycidyl ether of polyphenols obtained by a condensation reaction between phenols and an aromatic carbonyl compound; glycidyl ether of polyols (polyoxyalkylene bisphenol A and the like); a polyglycidyl compound derived from aromatic amines.

One kind of component (A) may be used singly, or two or more kinds of components (A) may be used in combination. Furthermore, the component (A) may be a liquid epoxy resin obtained by dissolving or compatibilizing a solid epoxy resin in a liquid epoxy resin.

The component (A) may be a difunctional epoxy resin, a trifunctional epoxy resin, or a tetrafunctional epoxy resin.

"Difunctional epoxy resin" means a resin having two epoxy groups per molecule. "Trifunctional epoxy resin" means a resin having three epoxy groups per molecule. "Tetrafunctional epoxy resin" means a resin having four epoxy groups per molecule.

As the difunctional epoxy resin, a difunctional bisphenol-type epoxy resin is preferable. Specific examples of the difunctional bisphenol-type epoxy resin include the following ones.

jER (registered trademark) 825, 827, 828, 828EL, 828XA, 806, 806H, 807, 4004P, 4005P, 4007P, and 4010P manufactured by Mitsubishi Chemical Corporation,

EPICLON (registered trademark) 840, 840-S, 850, 850-S, EXA-850CRP, 850-LC, 830, 830-S, 835, EXA-830CRP, EXA-830LVP, and EXA-835LV manufactured by DIC Corporation,

EPOTORT (registered trademark) YD-115, YD-115G, YD-115CA, YD-118T, YD-127, YD-128, YD-128G, YD-128S, YD-128CA, YDF-170, YDF-2001, YDF-2004, and YDF-2005RL manufactured by NIPPON STEEL & SUMIKIN CHEMICAL CO., LTD., and the like.

Examples of commercial products of epoxy resins having three or more epoxy groups per molecule include the following ones.

jER (registered trademark) 152, 154, 157S70, 1031S, 1032H60, 604, 630, and 630LSD manufactured by Mitsubishi Chemical Corporation,

N-730A, N-740, N-770, N-775, N-740-80M, N-770-70M, N-865, N-865-80M, N-660, N-665, N-670, N-673, N-680, N-690, N-695, N-665-EXP, N-672-EXP, N-655-EXP-S, N-662-EXP-S, N-665-EXP-S, N-670-EXP-S, N-685-EXP-S, and HP-5000 manufactured by DIC Corporation, TETRAD-X and TETRAD-C manufactured by MITSUBISHI GAS CHEMICAL COMPANY, INC..

It is preferable that the component (A) contain a bisphenol-type epoxy resin as a main component, because such a resin is good in economical efficiency, chemical resistance, heat resistance, and mechanical properties. As the bisphenol-type epoxy resin, a bisphenol A epoxy resin and a bisphenol F epoxy resin are low-viscosity liquids that are particularly preferable. Furthermore, in view of improving weather fastness and fracture toughness, it is also preferable to use an alicyclic epoxy resin (such as CELLOXIDE 2021P, CELLOXIDE 2081, and CELLOXIDE 2000 manufactured by DAICEL CORPORATION, and TTA26 manufactured by Jiangsu Tetra New Material Technology Co., Ltd.) in combination with the bisphenol-type epoxy resin.

Mixing in glycidyl ethers of a polyhydric alcohol (for example, YED216M manufactured by Mitsubishi Chemical Corporation. and the like) as the component (A) is also effective, because then the molded article can be toughened, viscosity is reduced, and impregnation properties are improved.

Sometimes the glycidyl ethers of a polyhydric alcohol contain a hydroxyl group in general. In this case, the glycidyl ethers of a polyhydric alcohol can also be used for finely adjusting the curing properties and the curing rate.

In a case where a glycidyl amine-based epoxy resin such as TETRAD-X is used in combination with other components as the component (A), and the amount thereof mixed in is adjusted each time, it is possible to increase the reaction rate of the epoxy resin component (E) as a preliminary reaction product and to suppress the subsequent temporal change. That is, by adjusting the content of the glycidyl amine-based epoxy resin, it is possible to shorten the time required for an aging step substantially without deteriorating the characteristics of the SMC and to obtain the SMC exhibiting good storage stability after aging.

As the glycidyl amine-based epoxy resin, N,N,N',N'-tetraglycidyl-m-xylylenediamine is preferable.

In a case where a glycidyl amine-based epoxy resin is used in combination with other components as the component (A), the content of the glycidyl amine-based epoxy resin with respect to 100% by mass of the component (A) is preferably about 1% to 30% by mass, more preferably 2% to 20% by mass, and even more preferably 3% to 15% by mass. These lower limits and upper limits of the content of the glycidyl amine-based epoxy resin can be arbitrarily combined.

In a case where the content of the glycidyl amine-based epoxy resin is preferably 1% by mass or more, more preferably 2% by mass or more, and even more preferably 3% by mass or more, the thickening rate of the SMC is further increased. Therefore, suitable aged viscosity is rapidly achieved, and the temporal change of the aged viscosity is easily suppressed. In a case where the content of the glycidyl amine-based epoxy resin is preferably 30% by mass or less, more preferably 20% by mass or less, and even more preferably 15% by mass or less, the temporal change of the aged SMC is suppressed, and heat of reaction generated during aging can be distributed over time. Accordingly, temperature rise can be prevented, and the occurrence of side reactions can be inhibited.

In a case where an epoxy adduct of an alkyl alcohol such as YED216M is used as the component (A), the content of the epoxy adduct of an alkyl alcohol with respect to 100% by mass of the component (A) is preferably about 1% to 20% by mass, more preferably 2% to 15% by mass, and even more preferably 2% to 10% by mass. In a case where the content of the epoxy adduct of an alkyl alcohol is preferably 1% by mass or more and more preferably 2% by mass or more, the molded article can be toughened, and the mechanical properties of the molded article are further improved. In a case where the content of the epoxy adduct of an alkyl alcohol is preferably 20% by mass or less, more preferably 15% by mass or less, and even more preferably 10% by mass or less, Tg of the molded article is not likely to be reduced excessively.

The epoxy equivalent of the component (A) may be adjusted so that the epoxy equivalent of the epoxy resin component (E) falls within a predetermined range. For example, the lower limit of the epoxy equivalent of the component (A) is preferably 100 or more, and more preferably 150 or more. In a case where the epoxy equivalent of the component (A) is preferably 100 or more, in obtaining the epoxy resin component (E) by a preliminary reaction between the component (A) and the component (B) (or a mixture containing the component (B) and the component (D)), strong heat is not likely to be generated within a short time, and the reaction can proceed gently. Therefore, it is possible to inhibit the occurrence of an unintended runaway reaction.

The upper limit of the epoxy equivalent of the component (A) is preferably 500 or less, more preferably 450 or less, and even more preferably 400 or less. In a case where the epoxy equivalent of the component (A) is equal to or less than the upper limit described above, the epoxy resin component (E) that is a preliminary reaction product has enough epoxy groups to react with the component (C) that is an epoxy curing agent.

For the aforementioned reasons, the epoxy equivalent of the component (A) is preferably 100 to 500, more preferably 150 to 450, and even more preferably 150 to 400. These lower limits and upper limits of the epoxy equivalent of the component (A) can be arbitrarily combined.

In a case where the component (A) is a mixture of a plurality of components, the epoxy equivalent of the component (A) is calculated by adding up the values obtained by multiplying the epoxy equivalent of each component by the mass ratio.

The value obtained by dividing the epoxy equivalent of the component (A) by the epoxy equivalent of the epoxy resin component (E) is preferably 0.5 or more, more preferably 0.55 or more, and even more preferably 0.6 or more. The value obtained by dividing the epoxy equivalent of the component (A) by the epoxy equivalent of the epoxy resin component (E) is preferably 0.95 or less, more preferably 0.90 or less, and even more preferably 0.85 or less.

In a case where the value obtained by dividing the epoxy equivalent of the component (A) by the epoxy equivalent of the epoxy resin component (E) is preferably equal to or more than the lower limit described above, the epoxy resin component (E) has enough epoxy groups to act in molding. Therefore, defective curing is unlikely to occur, the curing reaction rate is increased, and the molding time can be sufficiently reduced. Furthermore, in a case where the value obtained by dividing the epoxy equivalent of the component (A) by the epoxy equivalent of the epoxy resin component (E) is preferably equal to or less than the upper limit described above, the proportion of the reaction product (that is, the reaction product (1) and the reaction product (2)) of the component (A) and the component (B) (or the mixture of the component (B) and the component (D)) in the epoxy resin component (E) is high enough. Therefore, the epoxy resin component (E) tends to have an appropriate molecular weight. In addition, a glass transition temperature (°C) of the epoxy resin component (E) (hereinafter, the glass transition temperature (°C) is referred to as "Tg") is also increased. Accordingly, the decrease of the melt viscosity of the thermosetting resin composition can be inhibited. As a result, at the time of molding of the SMC, complicated shapes such as small bumps and dents are fully filled with reinforcing fibers, and the mechanical properties of the obtained molded article are further improved.

For the aforementioned reasons, the value obtained by dividing the epoxy equivalent of the component (A) by the epoxy equivalent of the epoxy resin component (E) is preferably 0.5 to 0.95, more preferably 0.55 to 0.9, and even more preferably 0.6 to 0.85. These lower limits and upper limits can be arbitrarily combined.

The component (B) is a polymer having a functional group reactive with the component (A). As described above, examples of the functional group in the component (B) include an amino group, an isocyanate group, and an acid anhydride group.

The component (B) may be obtained by copolymerizing a vinyl compound and an ethylenically unsaturated acid anhydride. As each of the vinyl compound and the ethylenically unsaturated acid anhydride, one kind may be used singly, or two or more kinds may be used in combination.

The component (B) may be an alternating copolymer, a random copolymer, a block copolymer, a graft copolymer, or the like. The component (B) can be appropriately selected from these copolymers in consideration of necessary characteristics.

In a case where an amino group is introduced into the component (B), as components of the copolymer, it is possible to use an amino group-containing vinyl compound having an ethylenically unsaturated double bond and an amino group (unsubstituted or substituted amino group). Examples of the amino group-containing vinyl compound include monosubstituted amino group-containing (meth)acrylic acid esters such as aminoalkyl (meth)acrylates, for example, aminomethyl (meth)acrylate, aminoethyl (meth)acrylate, aminopropyl (meth)acrylate, or aminoisopropyl (meth)acrylate, or N-alkylaminoalkyl (meth)acrylic acid esters, for example, N-(t-butyl)aminoethyl (meth)acrylate; disubstituted amino group-containing (meth)acrylic acid esters such as N,N-dialkylaminoalkyl (meth)acrylic acid esters, for example, N,N-dimethylaminoethyl (meth)acrylate, N,N-diethylaminoethyl (meth)acrylate, and N,N-dimethylaminopropyl (meth)acrylate; quaternized salts of these amino group-containing monomers or the like; amino group-containing styrenes such as p-aminostyrene; dialkylamino group-containing styrenes such as 3-(dimethylamino)styrene and dimethylaminomethylstyrene; dialkylaminoalkylvinyl ethers such as N,N-dimethylaminoethylvinyl ether and N,N-diethylaminoethylvinyl ether; allylamine, 4-diisopropylamino-1-butene, trans-2-butene-1,4-diamine, 2-vinyl-4,6-diamino-1,3,5-triazine.

In a case where an isocyanate group is introduced into the component (B), as a component of the copolymer, it is possible to use an isocyanate group-containing vinyl compound such as 2-(meth)acryloyloxyethyl isocyanate, 2-(2-(meth)acryloyloxyethoxy)ethyl isocyanate, or 1,1-bis((meth)acryloyloxyethoxymethyl)ethyl isocyanate.

As the component (B), a vinyl-based copolymer having acid anhydride groups, that is, a copolymer having a vinyl compound-based unit and an ethylenically unsaturated acid anhydride-based unit, is preferable. The component (B) is more preferably a copolymer having two or more acid anhydride groups per molecule.

A copolymer in which maleic anhydride is used as a component is an example of the component (B) having acid anhydride groups.

Examples of commercial products of the component (B) having acid anhydride groups include a styrene-maleic anhydride copolymer (SMA series manufactured by Cray Valley), a methyl vinyl ether-maleic anhydride copolymer (Gantrez AN series manufactured by Ashland), a methyl vinyl ether-maleic anhydride copolymer cross polymer (Stabileze QM manufactured by Ashland), an olefin-maleic anhydride group copolymer (DIACARNA series manufactured by Mitsubishi Chemical Corporation), an isobutylene-maleic anhydride copolymer (ISOBAM series manufactured by KURARAY CO., LTD.), an ethylene-acrylic acid ester-maleic anhydride copolymer (LOTADER series and BONDINE series manufactured by Arkema), and the like. These are merely examples of commercial products of the component (B) having acid anhydride groups, and commercial products of the component (B) having acid anhydride groups are not limited to these examples.

The vinyl compound is not particularly limited, and vinyl compounds other than the above can be appropriately used. However, in a case where a polyfunctional vinyl compound is used as the vinyl compound, a three-dimensional network structure is formed, which leads to a concern that the solubility in and compatibility with the epoxy resin may extremely deteriorate. Therefore, as the vinyl compound, a monofunctional vinyl compound is preferable. Particularly, as the vinyl compound, in view of economical efficiency, hydrophobicity, and copolymerization properties, a compound having a styrene skeleton is preferable, and styrene is more preferable.

The ethylenically unsaturated acid anhydride is not particularly limited as long as it is a compound having an acid anhydride skeleton containing a vinyl group. As the ethylenically unsaturated acid anhydride, in view of economical efficiency, maleic anhydride is preferable.

Considering the above aspects, as the component (B), a styrene-maleic anhydride copolymer is preferable.

Considering the mold release properties that the formed SMC will exhibit, it is also possible to use an olefin as the vinyl compound. However, in a case where the component (B) contains many olefins, the compatibility with the epoxy resin is likely to deteriorate. Furthermore, in a case where Tg is low, the heating temperature cannot be raised during dehydration. As a result, facilities for vacuum drying and the like are required, and the economical efficiency is lost. Therefore, in a case where an olefin is used, it is preferable to determine the mixing ratio in consideration of the required characteristics.

In a case where the component (B) is a styrene-maleic anhydride copolymer, the ratio of maleic anhydride to styrene (maleic anhydride/styrene) is preferably 1/8 to 1/1, more preferably 1/6 to 1/1, and even more preferably 1/5 to 1/1. In a case where the ratio is preferably 1/8 to 1/1, the component (B) has good compatibility with the component (A), has a high glass transition point (Tg), and can be inhibited from absorbing water. The ratio may be selected in consideration of the required SMC characteristics and absorbency. For example, in a case where the inhibition of water absorption is considered important, it is more preferable to increase the proportion of styrene so that the ratio of maleic anhydride to styrene is 1/5 to 1/2.

The acid value of the component (B) is preferably 100 to 700 mg KOH/g, more preferably 100 to 550 mg KOH/g, even more preferably 160 to 500 mg KOH/g, and particularly preferably 160 to 450 mg KOH/g. These lower limits and upper limits of the acid value of the component (B) can be arbitrarily combined.

In a case where the acid value of the component (B) is preferably 700 or less, more preferably 550 or less, even more preferably 500 or less, and particularly preferably 450 or less, the component (B) has good compatibility with the component (A) as an epoxy resin. Furthermore, it is not necessary to use a component having an extremely small molecular weight as the vinyl compound. In addition, the amount of water that the component (B) absorbs during storage is reduced. Therefore, it is possible to prevent the quality of the SMC from deteriorating due to the hydrolysis of the acid anhydride groups during the manufacturing of the SMC, which facilitates quality control.

In a case where the acid value of the component (B) is preferably 100 or more and more preferably 160 or more, the proportion of acid anhydride groups per molecule of the component (B) tends to be sufficient, and the molecular weight thereof tends not to be excessively high. Therefore, in a case where the epoxy resin component (E) obtained using the component (B) having an acid value of 100 or more is used, the thermosetting resin composition has low resin viscosity before aging, and the melt viscosity of the SMC tends not to be excessively reduced. In this way, the decrease in the melt viscosity is inhibited without deterioration of impregnation properties at the time of manufacturing. Accordingly, in a case where the SMC is melted, the thermosetting resin composition and the reinforcing fiber bundles are unlikely to be separated from each other. As a result, complicated shapes such as small bumps and dents are fully filled with the reinforcing fibers, and the formation of burrs is further suppressed.

The above effects are markedly exhibited particularly in a case where the component (B) has a maleic anhydride-based unit and an acid value of 100 to 700 mg KOH/g.

The mass average molecular weight of the component (B) is preferably 1,000 to 15,000, and more preferably 1,500 to 10,000. These lower limits and upper limits of the mass average molecular weight of the component (B) can be arbitrarily combined.

In a case where the mass average molecular weight of the component (B) is preferably 1,000 or more and more preferably 1,500 or more, the component (B) can have a sharp molecular weight distribution. Therefore, the characteristics of the epoxy resin component (E) tend to be favorably reproduced.

In contrast, in a case where the mass average molecular weight of the component (B) is preferably 15,000 or less and more preferably 10,000 or less, the epoxy resin component (E) has a relatively low average molecular weight. Therefore, the SMC tends to have both the tackiness and draping properties and to be good in processability at the time of press molding.

The component (B) preferably has two or more acid anhydride groups per molecule. The number of acid anhydride groups per molecule of the component (B) is more preferably 8 to 50, even more preferably 10 to 40, and particularly preferably 10 to 30. These lower limits and upper limits of the number of acid anhydride groups per molecule of the component (B) can be arbitrarily combined.

In a case where the number of acid anhydride groups per molecule of the component (B) is preferably two or more, more preferably eight or more, and even more preferably ten or more, it is possible to inhibit the melt viscosity from excessively decreasing at the time of molding of the SMC. As a result, the formation of burrs is suppressed, the thermosetting resin composition and the reinforcing fiber bundles are unlikely to be separated from each other, and complicated shapes such as small bumps and dents are fully filled with the reinforcing fibers. Therefore, a molded article having good mechanical properties and good heat resistance is obtained.

In a case where the number of acid anhydride groups per molecule of the component (B) is preferably 50 or less, more preferably 40 or less, and even more preferably 30 or less, during the manufacturing of the SMC, a mixture (that is, a thermosetting resin precursor which will be described later) obtained by mixing together the component (A), the component (B), and the component (D) which is used as needed does not easily thicken immediately after the mixing, and reinforcing fibers can be impregnated better with the mixture. Therefore, the quality of the SMC is further improved.

It is preferable that the component (B) be dehydrated in advance before being used for manufacturing the SMC. For example, in a case where Tg of the component (B) is higher than 100 °C, it is preferable to dehydrate the component (B) in an oven at 100 °C. In a case where Tg of the component (B) is 100 °C or lower, it is preferable to remove moisture from the component (B) by appropriately reducing the oven temperature and lengthening the heating time or heating the component (B) in a vacuum and then use the component (B). In a case where the component (B) is sufficiently dehydrated in advance, the acid anhydride groups in the component (B) are not easily hydrolyzed to form carboxyl groups, and do not easily react with the component (C) during the manufacturing of the SMC. As a result, the quality of the SMC does not easily deteriorate.

The component (D) is a liquid monofunctional acid anhydride having one acid anhydride group per molecule. The "liquid" monofunctional acid anhydride is a compound that stays in a liquid state at 25 °C.

Specific examples of the component (D) include acid anhydrides such as a dicarboxylic acid compound having only one cyclic acid anhydride group (-C(O)OC(O)-) per molecule.

More specifically, examples of the compound having one cyclic acid anhydride group include dodecenyl succinic anhydride, polyadipic anhydride, polyzelaic anhydride, methyl tetrahydrophthalic anhydride, methyl hexahydrophthalic anhydride, methyl himic anhydride, hexahydrophthalic anhydride, phthalic anhydride, trimellitic anhydride, 3-acetamidophthalic anhydride, 4-pentene-1,2-dicarboxylic anhydride, 6-bromo-1,2-dihydro-4H-3,1-benzoxazine-2,4-dione, 2,3-anthracene dicarboxylic anhydride, and the like.

As the liquid monofunctional acid anhydride, one kind of compound may be used singly, or two or more kinds of compounds may be used in combination. The liquid monofunctional acid anhydride may be obtained by dissolving a solid monofunctional acid anhydride in a liquid monofunctional acid anhydride.

Among these, in view of the thickening stability of the thermosetting resin composition and the heat resistance and mechanical characteristics of the molded article, phthalic anhydride and hydrogenated phthalic anhydride are preferable as the component (D). In addition, the component (D) may further have a functional group such as a methyl group. The hydrogenated phthalic anhydride is a compound formed in a case where some or all unsaturated carbon bonds in a benzene ring of phthalic anhydride are substituted with a saturated carbon bond.

The ratio of the gram equivalent number of acid groups in the component (B) to the gram equivalent number of epoxy groups in the component (A) is preferably 0.005 to 0.08, more preferably 0.010 to 0.08, and even more preferably 0.012 to 0.07. These lower limits and upper limits of the ratio can be arbitrarily combined.

In the epoxy resin component (E), the gram equivalent number of acid groups in the component (B) can be calculated based on carboxyl groups formed by the reaction between the acid anhydride group derived from the component (B) and the epoxy groups in the component (A). Likewise, the gram equivalent number of acid groups in the component (D) can be calculated based on carboxyl groups formed by the reaction between the acid anhydride groups derived from the component (D) and the epoxy groups in the component (A).

In a case where the component (B) is a mixture of a plurality of components, the gram equivalent number of acid groups in the component (B) is calculated by adding up the values obtained by multiplying the gram equivalent number of acid groups in each component by the mass ratio. The same applies to the component (D).

Particularly, in a case where the epoxy resin component (E) contains the reaction product (1) and the reaction product (2), the ratio of the gram equivalent number of acid groups in the component (B) to the gram equivalent number of epoxy groups in the component (A) is preferably 0.005 to 0.08, and the ratio of the total gram equivalent number of acid groups in the component (B) and acid groups in the component (D) to the gram equivalent number of epoxy groups in the component (A) is preferably 0.1 to 0.5. In this case, the SMC has both the higher tackiness and higher draping properties, and the handleability of the SMC is further improved. In addition, the melt viscosity of the thermosetting resin composition in the SMC tends to fall within an appropriate numerical range, and reinforcing fiber filling properties for complicated shapes such as small bumps and dents at the time of molding of the SMC are further improved. As a result, the obtained molded article has higher mechanical properties, and the variation in the mechanical properties of the molded article is further reduced.

The epoxy resin component (E) is obtained by generating the reaction product (1) by causing a reaction between at least the component (A) and the component (B). Therefore, the epoxy resin component (E) sometimes contains an unreacted component (A) and an unreacted component (B) in addition to the reaction product (1).

The epoxy resin component (E) is obtained by generating, in addition to the reaction product (1), the reaction product (2) by allowing the component (A), the component (B), and the component (D) to react with one another. In this case, the epoxy resin component (E) sometimes contains an unreacted component (A), an unreacted component (B), and an unreacted component (D), in addition to the reaction product (1) and the reaction product (2).

As long as the effects of the present invention are not impaired, the epoxy resin component (E) may be obtained by allowing the component (A), the component (B), and components other than the component (A), the component (B), and the component (D) to react with one another. In a case where the epoxy resin component (E) is obtained by using other components, sometimes the epoxy resin component (E) additionally contains a reaction product generated by a reaction between at least one component selected from the group consisting of the component (A), the component (B), and the component (D) and other components.

The component (C) is an epoxy curing agent.

Examples of the component (C) include an aliphatic amine, an aromatic amine, a modified amine, a secondary amine, a tertiary amine, an imidazole-based compound, a mercaptan, dicyandiamide, and the like. One kind of each of these compounds may be used singly, or two or more kinds of these compounds may be used in combination.

As the curing agent, a compound having a melting point of 180 °C to 300 °C is preferable, because such a curing agent makes it possible to obtain a molded article having good toughness and good heat resistance while maintaining the storage stability and quick curing properties of the SMC. As the curing agent having a melting point of 180 °C to 300 °C, dicyandiamide and imidazole-based compounds are preferable. Among the imidazole-based compounds, for example, 2,4-diamino-6-[2'-methylimidazolyl-(1')]-ethyl-s-triazine can be suitably used because this compound has high heat resistance and favorable storage stability.

The particle size of the component (C) is preferably 0.1 to 10 μm, and more preferably 0.5 to 5 μm. These lower limits and upper limits of the average particle size can be arbitrarily combined.

In a case where the particle size of the component (C) is preferably 0.1 μm or more and more preferably 0.5 μm or more, the epoxy resin has a relatively small contact interface. Therefore, the increase of the curing rate at the time of press molding is inhibited, and a runaway reaction further inducing a curing reaction by heat generation is unlikely to occur. In addition, a curing reaction is unlikely to proceed while the manufactured SMC is being stored, and good storage stability is obtained.

In a case where the particle size of the component (C) is preferably 10 μm or less and more preferably 5 μm or less, the contact interface between the epoxy resin and the component (C) is relatively large. Therefore, a sufficient curing rate tends to be maintained at the time of press molding.

Specific examples of optional components include a curing accelerator for an epoxy resin, an inorganic filler, an internal release agent, a surfactant, an organic pigment, an inorganic pigment, a viscosity reducer, a surface conditioner, other resins (a thermoplastic resin, a thermoplastic elastomer, and an elastomer), and the like.

As the curing accelerator for an epoxy resin, a urea compound is preferable because such a compound improves the mechanical characteristics (bending strength and flexural modulus) of fiber-reinforced composites.

Examples of the urea compound include 3-phenyl-1,1-dimethylurea, 3-(3,4-dichlorophenyl)-1,1-dimethylurea, 3-(3-chloro-4-methylphenyl)-1,1-dimethylurea, 2,4-bis(3,3-dimethylureide)toluene, 1,1'-(4-methyl-1,3-phenylene)bis(3,3-dimethylurea), and the like.

Examples of the inorganic filler include calcium carbonate, aluminum hydroxide, clay, barium sulfate, magnesium oxide, glass powder, hollow glass beads, aerosil, and the like.

Examples of the internal release agent include carnauba wax, zinc stearate, calcium stearate, and the like.

In a case where the SMC contains a surfactant, a carrier film is released better from the SMC, and the formation of voids can be reduced. As the surfactant, a liquid surfactant is preferable in view of migration to a surface, and a liquid surfactant containing an alkyl chain having 12 to 18 carbon atoms is more preferable.

By changing the viscoelasticity of the epoxy resin composition, the thermoplastic resin, the thermoplastic elastomer, and the elastomer allow the epoxy resin composition to have appropriate viscosity, an appropriate storage modulus, and appropriate thixotropy and improve the toughness of the cured product of the epoxy resin composition. As each of the thermoplastic resin, the thermoplastic elastomer, and the elastomer, one kind of material may be used singly, or two or more kinds of materials may be used in combination.

It is preferable that the aged viscosity and melt viscosity of the thermosetting resin composition satisfy the following requirements (i) to (iii) depending on the curing characteristics of the thermosetting resin composition.

Specifically, in a case where the curing start temperature of the thermosetting resin composition is 70 °C or higher and lower than 100 °C, it is preferable that the thermosetting resin composition satisfy the following requirements (i) and (ii). Furthermore, in a case where the curing start temperature of the thermosetting resin composition is 100 °C or higher, it is preferable that the thermosetting resin composition satisfy all of the following requirements (i) to (iii).

 Requirement (i): an aged viscosity at 25 °C is 5,000 to 90,000 Pa·s.
 Requirement (ii): a melt viscosity at 70 °C is 15 Pa·s or higher.
 Requirement (iii): a melt viscosity at 100 °C is 1 Pa·s or higher.

The requirements (i) to (iii) will be specifically described in the section of [Second aspect] of the present invention that will be described later.

It is more preferable that the aged viscosity and melt viscosity of the thermosetting resin composition further satisfy the following requirement (iv).

Requirement (iv): a minimum viscosity in a melt viscosity is 0.5 Pa·s or higher.

The requirement (iv) will be specifically described in the section of [Second aspect] of the present invention that will be described later.

(Method for manufacturing thermosetting resin composition)

The thermosetting resin composition can be manufactured, for example, by preparing a thermosetting resin precursor by means of mixing together at least the component (A), the component (B), and the component (C) and causing a reaction between at least the component (A) and the component (B) in the thermosetting resin precursor. The thermosetting resin precursor may be aged to obtain the thermosetting resin composition.

The thermosetting resin precursor may be prepared by simultaneously mixing together the component (A), the component (B), the component (C), and the component (D) which is used as needed, or prepared by mixing together premixes each containing 2 kinds of components selected from the group consisting of the component (A), the component (B), the component (C), and the component (D).

Particularly, it is preferable to mix a premix containing the component (A) and the component (C) with a premix containing the component (B) and the component (D). In this case, it is preferable to dissolve the component (B) in advance in the component (D) and then use the mixture.

Furthermore, in view of the application to the general SMC manufacturing process, it is preferable to manufacture the epoxy resin component (E) by dissolving the component (B) in advance in the component (D) to obtain a mixture of the component (B) and the component (D) and then mixing the component (A) with the mixture to cause a preliminary reaction.

In a case where the component (B) is dissolved in advance in the component (D), the reaction between the mixture and the component (A) proceeds at a liquid-liquid interface. Therefore, the reaction tends to be completed in a short period of time. In a case where the reaction proceeds for a short period of time, the risk of it being affected by outside moisture can be reduced.

For the aforementioned reasons, the component (D) is preferably a compound capable of dissolving the component (B).

The mixing amount of the component (B) with respect to 100 parts by mass of the component (A) is preferably 0.3 to 15 parts by mass, more preferably 0.7 to 15 parts by mass, and even more preferably 0.8 to 14 parts by mass.

In a case where the mixing amount of the component (B) with respect to 100 parts by mass of the component (A) is preferably 0.3 parts by mass or more, more preferably 0.7 parts by mass or more, and even more preferably 0.8 parts by mass or more, the formation of burrs at the time of molding is further reduced, and the reinforcing fiber filling properties of the SMC are further improved.

In a case where the mixing amount of the component (B) with respect to 100 parts by mass of the component (A) is preferably 15 parts by mass or less and more preferably 14 parts by mass or less, the quality of the SMC is further improved.

The mixing amount of the component (C) with respect to 100 parts by mass of the component (A) is preferably 1 to 20 parts by mass, more preferably 2 to 15 parts by mass, and even more preferably 4 to 10 parts by mass.

In a case where the mixing amount of the component (C) with respect to 100 part by mass of the component (A) is preferably 1 part by mass or more, more preferably 2 parts by mass or more, and even more preferably 4 parts by mass or more, the formation of burrs at the time of molding is further reduced, and the reinforcing fiber filling properties of the SMC are further improved.

In a case where the mixing amount of the component (C) with respect to 100 parts by mass of the component (A) is preferably 20 parts by mass or less, more preferably 15 parts by mass or less, and even more preferably 10 parts by mass or less, the reinforcing fiber bundles are impregnated better with the thermosetting resin composition.

In mixing in the component (D), the mixing amount of the component (D) with respect to 100 parts by mass of the component (A) is preferably 5 to 20 parts by mass, more preferably 8 to 13 parts by mass, and even more preferably 9 to 12 parts by mass.

In a case where the mixing amount of the component (D) with respect to 100 parts by mass of the component (A) is preferably 5 parts by mass or more, more preferably 8 parts by mass or more, and even more preferably 9 parts by mass or more, the formation of burrs at the time of molding after thickening is further reduced, and the reinforcing fiber filling properties of the SMC are further improved.

In a case where the mixing amount of the component (D) with respect to 100 parts by mass of the component (A) is preferably 20 parts by mass or less, more preferably 13 parts by mass or less, and even more preferably 12 parts by mass or less, the quality of the SMC is further improved.

The aforementioned lower limits and upper limits of the mixing amount of each of the component (B), the component (C), and the component (D) with respect to the component (A) can be arbitrarily combined.

Mixing can be performed by a method using a general mixing device. Examples of the device include an electric mortar, an attritor, a planetary mixer, a dissolver, a triple roll, a kneader, an all-purpose stirrer, a homogenizer, a homodispenser, a ball mill, a bead mill, and the like. Two or more kinds of these devices may be used in combination in stages. Depending on the method selected, shear heating or the like sometimes occurs. Therefore, in order to prevent an excessive increase in temperature, cooling or the like needs to be performed as appropriate.

The resin viscosity of the thermosetting resin precursor is preferably 0.15 to 15 Pa·s, and more preferably 0.3 to 10 Pa·s. These lower limits and upper limits of the resin viscosity of the thermosetting resin precursor can be arbitrarily combined.

In a case where the resin viscosity of the thermosetting resin precursor is preferably 0.15 Pa·s or higher and more preferably 0.3 Pa·s or less, settling of the component (C) dispersed in the thermosetting resin precursor is unlikely to occur, and the component (C) does not easily remain on the surface layer side of the reinforcing fiber bundles at the time of the manufacturing of the SMC. As a result, it is possible to cause the component (C) to be carried in the reinforcing fiber bundles, and to prevent only the thermosetting resin precursor from being leveled when the thermosetting resin precursor film is applied on a carrier film at the time of the manufacturing of the SMC.

In a case where the resin viscosity of the thermosetting resin precursor is preferably 15 Pa·s or less and more preferably 10 Pa·s or less, the reinforcing fiber bundles can be uniformly impregnated with the thermosetting resin precursor at the time of manufacturing of the SMC. Therefore, good SMC quality can be maintained.

By accelerating the reaction between the component (A) and the component (B) mixed together (or the mixture of the component (B) and the component (D)) in the thermosetting resin precursor, the thermosetting resin composition is obtained.

Specifically, for example, the thermosetting resin precursor is left to stand at a temperature of 15 °C to 80 °C for 3 to 20 days, so that some epoxy groups in the component (A) and the acid anhydride groups in the component (B) (or the mixture of the component (B) and the component (D)) have a reaction and that the epoxy resin component (E) is generated. In this way, the thermosetting resin composition is obtained.

The aging period may be set so that the acid anhydride groups in the component (B) (or the mixture of the component (B) and the component (D)) react with some of the epoxy groups in the component (A) to an extent causing no problem for practical use and that the aged viscosity falls within the range described in the aforementioned requirement (i). Specifically, for example, in a case where the amount of reactive functional groups (such as acid anhydride groups) derived from the component (B) (or the mixture of the component (B) and the component (D)) is reduced and becomes about 20% of the total amount of reactive functional groups at the aging start point, the reaction may be determined as substantially having proceeded. Thereafter, the extent of the reaction can be determined based on the aged viscosity of the thermosetting resin composition.

The aging temperature can be appropriately determined depending on the component (C) used. In order to prevent the reaction between the component (A) and the component (B) (or the mixture of the component (B) and the component (D)) from being excessively suppressed and to inhibit the component (A), the preliminary reaction product, and the component (C) from having an unintended reaction, aging is preferably performed at a temperature in a range of 15 °C to 50 °C.

After aging is complete, it is preferable that the thermosetting resin composition be kept frozen. The freezing temperature can be appropriately determined from Tg of the thermosetting resin composition. For example, it is preferable that the thermosetting resin composition be frozen at a temperature lower than Tg by 1 °C or more. For example, in a case where the freezing temperature is -10 °C or lower, temporal change can be substantially suppressed.

(Reinforcing fiber bundles)

The reinforcing fiber bundles in the SMC can be obtained by cutting a reinforcing fiber bundle consisting of continuous reinforcing fibers. The type of reinforcing fibers used in the reinforcing fiber bundle is not particularly limited. Specific examples of the reinforcing fibers include inorganic fibers, organic fibers, metal fibers, and hybrid reinforcing fibers constituted with a combination of these.

Examples of the inorganic fibers include carbon fibers (including graphite fibers, the same is true in the following description), silicon carbide fibers, alumina fibers, tungsten carbide fibers, boron fibers, glass fibers, and the like. Examples of the organic fibers include aramid fibers, high-density polyethylene fibers, other general nylon fibers, polyester fibers, and the like. Examples of the metal fibers include fibers of stainless steel, iron, and the like. The inorganic fibers may be carbon fibers whose surface is coated with a metal.

As the reinforcing fibers, inorganic fibers are preferable. Considering the mechanical properties of the molded article such as strength, the carbon fibers are preferable among the above inorganic fibers.

Examples of the carbon fibers include polyacrylonitrile (PAN)-based carbon fibers, rayon-based carbon fibers, pitch-based carbon fibers, and the like. Among these, PAN-based carbon fibers are preferable because they have good compressive strength and low density. One kind of each of the carbon fibers may be used singly, or two or more kinds of the carbon fibers may be used in combination.

The fiber length of the reinforcing fiber bundles is preferably 5 to 120 mm, more preferably 10 to 80 mm, and even more preferably 20 to 80 mm. These lower limits and upper limits of the fiber length of the reinforcing fiber bundles can be arbitrarily combined.

In a case where the fiber length of the reinforcing fiber bundles is preferably 5 mm or more, more preferably 10 mm or more, and even more preferably 20 mm or more, the mechanical properties of the molded article obtained by molding the SMC tend to be improved. In a case where the fiber length of the reinforcing fiber bundles is preferably 120 mm or less and more preferably 80 mm or less, the fluidity of the SMC at the time of molding tends to be improved. In a case where the fiber length of the reinforcing fiber bundles is preferably 5 to 120 mm, more preferably 10 to 80 mm, and even more preferably 20 to 80 mm, the mechanical properties of the molded article and the fluidity of the SMC during molding can be simultaneously accomplished, and the variation in the mechanical properties of the molded article tends to be suppressed.

The number of filaments constituting the reinforcing fiber bundle is preferably 1,000 to 30,000, and more preferably 1,500 to 20,000. These lower limits and upper limits of the number of filaments constituting the reinforcing fiber bundle can be arbitrarily combined.

In a case where the number of filaments constituting the reinforcing fiber bundle is preferably 1,000 or more and more preferably 1,500 or more, it is possible to inhibit fibers from being entangled with each other during the manufacturing of the SMC and to improve the fluidity of the SMC. In a case where the number of filaments constituting the reinforcing fiber bundle is 30,000 or less and more preferably 20,000 or less, individual fiber bundles are small enough. Therefore, the variation in the mechanical properties of the SMC can be reduced.

The number of filaments constituting the reinforcing fiber bundle is not necessarily identical to the number of filaments constituting the reinforcing fiber bundle supplied for manufacturing the SMC. For manufacturing the SMC, for example, a reinforcing fiber bundle consisting of 1,000 to 100,000 filaments can be suitably used. Specifically, for example, a reinforcing fiber bundle consisting of more than 30,000 filaments may be split inline and used.

As long as the effects of the present invention are not impaired, the SMC may further contain reinforcing fiber bundles having a fiber length less than 5 mm and reinforcing fiber bundles having a fiber length more than 120 mm, and may further contain reinforcing fibers consisting of less than 1,000 filaments and reinforcing fibers consisting of more than 30,000 filaments.

The basis weight of the reinforcing fiber bundles is preferably 100 to 3,000 $g/m^2$, more preferably 300 to 2,000 $g/m^2$, and even more preferably 500 to 2,000 $g/m^2$. These lower limits and upper limits of the basis weight of the reinforcing fiber bundles can be arbitrarily combined.

The number of the cut reinforcing fiber bundles is preferably 4,000 to 1,000,000/$m^2$, and more preferably 10,000 to 800,000/$m^2$. In a case where the basis weight and number of the reinforcing fiber bundles are within the above range, defective

impregnation with the thermosetting resin is inhibited at the time of manufacturing of the SMC, and the variation in the size of cut reinforcing fibers in the SMC and the uneven distribution of the reinforcing fibers in the SMC are inhibited. As a result, the variation in quality, such as mechanical properties, in the molded article is suppressed, and the SMC and a molded article with higher quality are obtained.

In a case where the SMC contains carbon fiber bundles, the ratio of the carbon fiber bundles (content rate of carbon fibers) to 100% by mass of the SMC is preferably 30% to 75% by mass, and more preferably 35% to 70% by mass. These lower limits and upper limits of the ratio of the carbon fiber bundles (content rate of carbon fibers) can be arbitrarily combined.

In a case where the content rate of carbon fibers is preferably 30% by mass or higher and more preferably 35% by mass or higher, the molded article has sufficient mechanical properties and has higher strength and higher elasticity. In a case where the content rate of carbon fibers is preferably 75% by mass or less and more preferably 70% by mass or less, the carbon fiber bundles are easily impregnated with the thermosetting resin composition, favorable fluidity tends to be exhibited at the time of molding of the SMC, and the molded article is inhibited from having a defective appearance.

(Method for manufacturing SMC)

By impregnating scattered reinforcing fiber bundles cut in a desired length with the thermosetting resin precursor and then aging the resultant, the SMC that contains a thermosetting resin containing a preliminary reaction product can be obtained.

More specifically, for example, two films on which the thermosetting resin precursor is formed as a film are prepared. For one of the films, reinforcing fiber bundles cut to a desired length are scattered in the form of a sheet on the thermosetting resin precursor formed as a film. Then, the other film is bonded thereto so that the thermosetting resin precursor comes into contact with the cut reinforcing fiber bundles, and the reinforcing fiber bundles are allowed to be impregnated with the precursor under pressure. Finally, the thermosetting resin precursor is aged so that a preliminary reaction proceeds, thereby obtaining the SMC containing a thermosetting resin. The details and preferred aspects of the aging of the thermosetting resin precursor are the same as those described above regarding the method for manufacturing the thermosetting resin composition.

(Operation and effect)

The SMC of the first aspect of the present invention described above contains a specific epoxy resin component (E). Therefore, the SMC has both the appropriate tackiness (stickiness) and appropriate draping properties (flexibility) and has good handleability. Particularly, in a case where the component (B) has two or more acid anhydride groups per molecule, an excessive decrease in the melt viscosity of the SMC is inhibited. Therefore, the outflow of the molten resin is suppressed, and the formation of burrs is reduced. Furthermore, the separation of the thermosetting resin composition and the reinforcing fiber bundles are inhibited, complicated shapes such as small bumps and dents are fully filled with the reinforcing fibers, and variation in reinforcing fibers does not easily occur in a molded article. As a result, the reinforcing fiber filling properties of the SMC are improved, and a molded article having good mechanical properties and good heat resistance can be obtained.

[Second aspect]

An SMC of a second aspect of the present invention contains a thermosetting resin composition and reinforcing fiber bundles. Details and preferred aspects of the thermosetting resin composition and the reinforcing fiber bundles are the same as those described above regarding the SMC of the first aspect of the present invention.

In the SMC of the second aspect of the present invention, the aged viscosity and melt viscosity of the thermosetting resin composition satisfy the following requirements (i) to (iii) depending on the curing characteristics of the thermosetting resin composition.

That is, in a case where the curing start temperature of the thermosetting resin composition is 70 °C or higher and lower than 100 °C, the thermosetting resin composition satisfies the following requirements (i) and (ii).

In a case where the curing start temperature of the thermosetting resin composition is 100 °C or higher, the thermosetting resin composition satisfies all of the following requirements (i) to (iii).

Requirement (i): an aged viscosity at 25 °C is 5,000 to 90,000 Pa·s.

Requirement (ii): a melt viscosity at 70 °C is 15 Pa·s or higher.

Requirement (iii): a melt viscosity at 100 °C is 1 Pa·s or higher.

The requirement (i) will be described.

In the SMC of the second aspect of the present invention, the aged viscosity of the thermosetting resin composition is 5,000 to 90,000 Pa·s, and preferably 6,000 to 90,000 Pa·s. Because the aged viscosity of the thermosetting resin composition is within the above numerical range, the SMC has appropriate tackiness and appropriate draping properties, and it is easy to process the SMC in a case where the SMC is cut before being molded. Because the SMC has appropriate tackiness, good workability can be obtained in a case where the SMC is laminated. Furthermore, in a case where the SMC is peeled off from a carrier film, a resin does not easily remain on the carrier film, which makes it easy to peel off the carrier film.

In a case where the thermosetting resin composition has a low aged viscosity that is about 5,000 Pa·s, a surfactant may be mixed in so that the carrier film is more easily peeled off. These lower limits and upper limits of the resin viscosity of the thermosetting resin composition can be arbitrarily combined.

The requirement (ii) will be described.

In the SMC of the second aspect of the present invention, the melt viscosity of the thermosetting resin composition at 70 °C is 15 Pa·s or higher, and preferably 18 Pa·s or higher. Because the melt viscosity at 70 °C is 15 Pa·s or higher, in manufacturing a molded article having complicated shapes such as small bumps and dents, it is possible to inhibit the separation of the molten thermosetting resin composition and the reinforcing fiber bundles. That is, the thermosetting resin composition is unlikely to separate from the reinforcing fiber bundles at the time of molding, and molding pressure can be applied to the entire SMC as well as the reinforcing fiber bundles. As a result, complicated shapes such as small bumps and dents are fully filled with the reinforcing fibers, and a molded article having good mechanical properties and good heat resistance is obtained.

The requirement (iii) will be described.

In a case where the curing start temperature of the thermosetting resin composition is 100 °C or higher, the melt viscosity at 100 °C is 1 Pa·s or higher, preferably 1.3 Pa·s or higher, and more preferably 1.5 Pa·s or higher.

In a case where the curing start temperature of the thermosetting resin composition is 100 °C or higher, in the SMC of the second aspect of the present invention, the melt viscosity of the thermosetting resin composition is equal to or higher than the lower limit specified in the requirement (ii) and the requirement (iii). Therefore, in manufacturing a molded article having complicated shapes such as small bumps and dents, it is possible to inhibit the separation of the molten thermosetting resin and the reinforcing fiber bundles. That is, the thermosetting resin composition is unlikely to separate from the reinforcing fiber bundles or to flow out of the SMC at the time of molding, and molding pressure can be applied to the entire SMC as well as the reinforcing fiber bundles. As a result, complicated shapes such as small bumps and dents are fully filled with the reinforcing fibers, and a molded article having good mechanical properties and good heat resistance is obtained.

In the SMC of the second aspect of the present invention, it is preferable that the aged viscosity and the melt viscosity of the thermosetting resin composition further satisfy the following requirement (iv).

Requirement (iv): a minimum viscosity in a melt viscosity is 0.5 Pa·s or higher.

The requirement (iv) will be described.

In a case where the curing start temperature of the thermosetting resin composition is 100 °C or higher, the minimum viscosity in the melt viscosity is 0.5 Pa·s or higher, preferably 0.55 Pa·s or higher, and more preferably 0.6 Pa·s or higher.

In the SMC of the second aspect of the present invention, the minimum viscosity is 0.5 Pa·s or higher. Therefore, the outflow of the molten SMC is unlikely to occur, and the amount of burrs is reduced. Furthermore, even though the curing start temperature is 100 °C or higher, which means that curing starts late, an excess of burrs is unlikely to form at the time of molding, complicated shapes such as small bumps and dents are fully filled with reinforcing fibers, the obtained molded article can maintain high mechanical properties, and the variation in the mechanical properties in the molded article can be suppressed.

(Operation and effect)

The SMC of the second aspect of the present invention described above satisfies the requirements (i) to (iii) and preferably satisfies the requirements (i) to (iv) depending on the curing characteristics of the thermosetting resin composition. Therefore, the SMC has both the appropriate tackiness (stickiness) and appropriate draping properties (flexibility), and the handleability of the SMC at the time of molding operation is improved. Furthermore, the molten SMC has viscosity equal to or higher than a specific value. Therefore, the formation of burrs is reduced, the separation of the reinforcing fiber bundles and the thermosetting resin composition is inhibited, complicated shapes are fully filled with the reinforcing fibers, and variation in the reinforcing fibers does not easily occur. As a result, the reinforcing fiber filling properties of the SMC are improved, and a molded article having good mechanical properties and good heat resistance can be obtained.

<Molded article>

The molded article of the present invention is an article obtained by press-molding the SMC of the present invention described above. It can be said that the molded article of the present invention is a cured product obtained by curing the SMC of the present invention by heat press molding.

The SMC of the present invention is cured, for example, by a method of disposing one sheet of the SMC of the present invention or a laminate of a plurality of sheets of the SMC of the present invention between a pair of heated dies, and pressing the disposed SMC so that the thermosetting resin composition in the SMC is cured.

The temperature at the time of heat press molding may be, for example, 80 °C to 180 °C. For example, it is generally known that Tg of a molded article made of an epoxy resin increases or decreases depending on the molding temperature. Furthermore, the higher the molding temperature, the higher the temperature of the thermosetting resin composition in the SMC, and the earlier the thermosetting resin composition is melted.

Therefore, for molding complicated shapes, it is necessary to mold the SMC while preventing the melt viscosity of the thermosetting resin composition from excessively decreasing during molding. Accordingly, the molding temperature needs to be appropriately determined in consideration of Tg required for the molded article and the shape to be molded.

The molding time may be, for example, 0.5 minutes to 60 minutes. The molding time may be appropriately selected in consideration of the shape of the molded article, the flow thickness, and the like.

The molded article of the present invention can also be manufactured by combining the SMC of the present invention with general thermosetting prepreg, thermoplastic prepreg; a unidirectional material, and a fiber substrate such as a woven fabric or a non-woven fabric. Particularly, a molded article obtained by simultaneously molding the SMC of the present invention and thermosetting or thermoplastic prepreg exhibits good mechanical properties due to the prepreg layer. In addition, in such a molded article, protrusions such as ribs and bosses can be formed by the SMC. Therefore, the shape to be molded can be more freely determined.

The molded article of the present invention may be obtained by a method in which the SMC of the present invention is disposed as front and back layers, a honeycomb structure such as corrugated cardboard as a core, a hollow layer, or a fiber-free resin layer is disposed between the SMC layers, and the obtained material is subjected to heat press molding. In this case, a lighter molded article is obtained, and the molded article tends to exhibit higher mechanical properties.

(Operation and effect)

The molded article of the present invention is an article obtained by press-molding the SMC of the present invention. Therefore, the molded article has good mechanical properties and good heat resistance.

The present invention is not limited to the embodiments described above, and can be modified in various ways. An embodiment obtained by appropriately combining the technical methods disclosed in the above embodiments is also within the technical scope of the present invention.

[Examples]

Hereinafter, the present invention will be specifically described with reference to examples. However, the present invention is not limited to the following description.

<Components>

(Component (A))

- jER828 (manufactured by Mitsubishi Chemical Corporation, bisphenol A-type liquid epoxy resin, epoxy equivalent: 186 g/eq, resin viscosity at 25 °C: 12 Pa·s)
- TETRAD-X (manufactured by MITSUBISHI GAS CHEMICAL COMPANY, INC., N,N,N',N'-tetraglycidyl-m-xylylenediamine, epoxy equivalent: 102 g/eq, resin viscosity at 25 °C: 2 Pa·s)
- YED216M (manufactured by Mitsubishi Chemical Corporation, hexanediol diglycidyl ether, epoxy equivalent: 150 g/eq, resin viscosity at 25 °C: 0.02 Pa·s)
- ARUFON UG-4040 (manufactured by TOAGOSEI CO., LTD., epoxy group-containing acrylic polymer, epoxy equivalent: 455 g/eq, solid at 25 °C)

(Component (B))

- SMA1000 (manufactured by Cray Valley, styrene-maleic acid copolymer, acid value: 472 mg KOH/g, number of acid anhydride groups: about 23, mass average molecular weight: about 5,500, acid equivalent: 119 g/eq)
- SMA3000 (manufactured by Cray Valley, styrene-maleic acid copolymer, acid value: 280 mg KOH/g, number of acid anhydride groups: about 23, mass average molecular weight: about 9,500, acid equivalent: 200 g/eq)
- SMAEF60 (manufactured by Cray Valley, styrene-maleic acid copolymer, acid value: 155 mg KOH/g, number of acid anhydride groups: about 16, mass average molecular weight: about 11,500, acid equivalent: 362 g/eq)

(Component (C))

- 2MZA-PW (manufactured by SHIKOKU CHEMICALS CORPORATION, 2,4-diamino-6-[2'-methylimidazole-(1')]-ethyl-s-triazine, melting point: 253 °C)
- DICYANEX 1400F (manufactured by Air Products and Chemicals, Inc., dicyandiamide, melting point: 206 °C)

(Component (D))

- HN-2200 (manufactured by Hitachi Chemical Co., Ltd., 3-methyl-1,2,3,6-tetrahydrophthalic anhydride or 4-methyl-1,2,3,6-tetrahydrophthalic anhydride, acid equivalent: 83 g/eq, viscosity at 25 °C: 0.075 mPa·s)

(Method for preparing master batch)

In this example, a master batch (hereinafter referred to as "MB") of a mixture of the component (A) and the component (C) was used. First, each component of the component (C) and jER828 were mixed together at a mass ratio of 1:1 and then premixed using a planetary stirring·deaerator MAZERUSTAR (manufactured by KURABO INDUSTRIES LTD.). Then, each mixture was kneaded using a triple roll, thereby obtaining the MB.

Unless otherwise specified, the amount of the component (C) described in Tables 1 to 4 is the same as the amount of the component (C) used together with jER828 to obtain the MB. In Tables 1 to 4, only the mixing amount of each component (C) contained in the MB is described. For example, in a case where 50 parts by mass of jER828 is mixed with DICYANEX1400F at a mass ratio of 1:1 to obtain 10 parts of the MB, 55 parts by mass is described in the table for jER828 and 5 parts is described in the table for DICYANEX1400F.

<Method for preparing mixture of component (B) and component (D)>

Each component of the component (B) was heated and dried in advance for 24 hours at 100 °C, then left to cool to room temperature in a desiccator, and added to a flask together with the component (D), and subjected to mixing and dispersion. Then, in a state where the mixture was being stirred, the temperature was raised to 70 °C. After reaching 70 °C, the mixture was continuously heated and stirred for 2 to 4 hours. Thereafter, the mixture was cooled to room temperature and confirmed to be free of precipitates. In this way, a mixed solution consisting of each component of the component (B) and the component (D) was obtained. At that time, in order to prevent the outside moisture from being drawn into the flask due to the internal volume change of the flask, the flask was closed except for a leak port, and the leak port was filled with calcium chloride so that moisture was not aspirated into the port.

<Calculation method>

(Gram equivalent number of epoxy groups in component (A))

The epoxy equivalent of each component used was multiplied by the mixing ratio, thereby calculating a gram equivalent number (meq) of epoxy groups in the component (A).

(Epoxy equivalent of component (A))

A reciprocal of the gram equivalent number of epoxy groups in the component (A) was multiplied by $10^5$, thereby calculating an epoxy equivalent (g/eq) of the component (A).

(Gram equivalent number of acid groups in component (B) and component (D))

The acid equivalent of each component used was multiplied by the mixing ratio, thereby calculating the gram equivalent number of acid groups in the component (B) and the component (D).

(Epoxy equivalent of epoxy resin component (E))

The total mass (g) of the component (A), the component (B), and the component (D) was divided by the gram equivalent number of epoxy groups in the epoxy resin component (E), thereby calculating an epoxy equivalent (g/eq) of the epoxy resin component (E). Here, the gram equivalent number of epoxy groups in the epoxy resin component (E) was calculated by subtracting the total gram equivalent number of acid groups in the component (B) and the component (D) from the gram equivalent number of epoxy groups in the component (A).

<Measurement method and evaluation method>

(Resin viscosity)

In this example, the resin viscosity of the component (A) and the thermosetting resin precursor was measured. Viscosity was measured at 25 °C by using TB-10 (manufactured by TOKI SANGYO CO., LTD.) equipped with an M3 rotor and adopted as a resin viscosity. The rotation speed of the rotor was appropriately set in a range of 12 to 60 rpm.

(Measurement of aged viscosity and melt viscosity)

In this example, for a thermosetting resin composition obtained by leaving a thermosetting resin precursor to stand at 25 °C for 168 to 240 hours, an aged viscosity and a melt viscosity were measured as described below.

The plate of a rheometer (manufactured by Thermo Fisher Scientific, HAAKE·MARS40) was heated to 25 °C. After the temperature was confirmed to be stable at 25 °C, a thermosetting resin was placed on the plate, the gap was adjusted, and then the plate was left as it was until the normal force became 5 N or lower. Thereafter, viscosity was measured for 10 minutes at 25 °C, and the viscosity of the thermosetting resin in a stable state was adopted as an aged viscosity.

Subsequently, the temperature was raised from 25 °C at 2 °C/min. Each of the values of viscosity at 70 °C and 100 °C was taken as a melt viscosity at each temperature. In a case where the viscosity increased due to the curing reaction of the thermosetting resin, the viscosity at an inflection point where the viscosity that had been decreasing started to increase was adopted as a minimum viscosity in a melt viscosity, and the temperature at which the minimum viscosity was obtained was adopted as a curing start temperature.

The measurement conditions were as follows.

Measurement mode: constant stress, level of stress: 300 Pa, frequency: 1.59 Hz, plate diameter: 25 mm, plate type: parallel plate, and plate gap: 0.5 mm.

(Evaluation of aged viscosity and melt viscosity)

The aged viscosity and the melt viscosity were evaluated as described below.

In a case where the curing start temperature of the thermosetting resin composition was 70 °C or higher and lower than 100 °C, and the following requirements (i) and (ii) were satisfied, the aged viscosity and the melt viscosity were evaluated as being favorable.

Requirement (i): an aged viscosity at 25 °C is 5,000 to 90,000 Pa·s.
Requirement (ii): a melt viscosity at 70 °C is 15 Pa·s or higher.

In a case where the curing start temperature of the thermosetting resin composition was 100 °C or higher, and the requirement (iii) was satisfied in addition to the above requirements (i) and (ii), the aged viscosity and the melt viscosity were evaluated as being favorable. In a case where the requirement (iv) was also satisfied, the aged viscosity and the melt viscosity were evaluated as being very favorable.

Requirement (iii): a melt viscosity at 100 °C is 1 Pa·s or higher.
Requirement (iv): a minimum viscosity in a melt viscosity is 0.5 Pa·s or higher.

(Handleability)

The handleability of the thermosetting resin composition was comprehensively evaluated from the results of the following tackiness evaluation and hardness evaluation. In a case where the thermosetting resin composition was graded A in the tackiness evaluation and the hardness evaluation, the handleability of the thermosetting resin composition was regarded as being favorable.

The handleability of the SMC was comprehensively evaluated from the results of the following tackiness evaluation and draping property evaluation. In a case where the SMC was graded A in the tackiness evaluation and the draping property evaluation, the handleability of the SMC was regarded as being favorable.

(Tackiness evaluation for thermosetting resin composition)

The thermosetting resin composition left to stand at 25 °C was evaluated according to the following standard.

A: The thermosetting resin composition feels appropriately tacky to the touch, and a certain amount of the composition can be isolated by hand or with a spatula.
B: The thermosetting resin composition feels very sticky to the touch, and a certain amount of the composition cannot be isolated by hand or with a spatula.

(Hardness evaluation for thermosetting resin composition)

The thermosetting resin composition left to stand at 25 °C was evaluated according to the following standard.

A: The thermosetting resin composition exhibits appropriate softness or flexibility in handling, and a certain amount of the composition can be isolated by hand or with a spatula.
B: The thermosetting resin composition is rigid or hard in handling, and a certain amount of the composition cannot be isolated by hand or with a spatula.

(Tackiness evaluation for SMC)

The SMC left to stand at 25 °C was evaluated according to the following standard.

A: The SMC feels appropriately tacky to the touch, and it is easy to laminate a plurality of SMC sheets.
B: The SMC feels very sticky to the touch, and it is impossible to laminate a plurality of SMC sheets.

(Draping property evaluation for SMC)

The SMC left to stand at 25 °C was evaluated according to the following standard.

A: The SMC exhibits appropriate softness or flexibility in handling, and can be easily cut with a blade for molding operation.
B: The SMC is rigid or hard in handling, and it is impossible or difficult to cut the SMC with a blade for molding operation.

(Burr percentage)

Molding was performed based on the following flat plate molding method. From the mass (Ws) of the SMC put in a die for molding and the mass (We) of a molded article from which burrs were removed after molding, a burr percentage was calculated by the following equation.

$$(\text{Burr percentage}) = (Ws - We)/Ws \times 100$$

The evaluation standard is as follows. A burr percentage evaluated as A or B was regarded as being favorable.

A: The burr percentage is 0.5% by mass or higher and less than 3% by mass.
B: The burr percentage is 3% by mass or higher and less than 5% by mass.
C: The burr percentage is 5% by mass or higher and less than 10% by mass.
D: The burr percentage is less than 0.5% by mass or 10% by mass or higher.

(Flat plate molding method)

A 300 mm (length) x 300 mm (width) die was filled with a laminate obtained by laminating the SMC cut to 280 mm (length) x 280 mm (width) in 2 ply. The SMC was heated and compressed for 5 minutes under the conditions of a die temperature of 150 °C and a pressure of 4 MPa, thereby obtaining a 300 mm x 300 mm flat plate-like molded article having a thickness of about 2 mm.

(Evaluation of rib filling properties)

A die was prepared which had a shape including a 400 mm (length) x 50 mm (width) top surface portion, vertical surfaces extending in a longitudinal direction, and a flange having a width of 10 mm continuing from the vertical surfaces. In the space between the vertical surfaces of the die (that is, behind the top surface), there was a cross rib having a height of 10 mm and a thickness of 2 mm carved at a pitch of 55 mm in the vertical direction and at a pitch of 15 mm in the horizontal direction. Rib filling properties were evaluated using this die.
Then, the die was filled with a laminate obtained by laminating the SMC cut to a length of 390 mm and a width of 85 mm in 2 ply and laminating the SMC cut to a length of 390 mm and a width of 45 mm in 2 ply. The laminate was heated and compressed for 5 minutes under the conditions of a die temperature of 150 °C and a pressure of 4 MPa, thereby obtaining a molded article.
From the appearance of the molded article, the rib filling properties were evaluated as below. The rib filling properties graded A were regarded as being favorable.

A: The molded article has no portion not filled with reinforcing fibers, and the rib part has few portions not filled with fibers (resin-rich portions).
B: The molded article has no portion not filled with reinforcing fibers, and the rib part has portions not filled with fibers (resin-rich portions).
C: The molded article has portions not filled with reinforcing fibers.

Based on the results of the following 3-point bending test and tensile test, the mechanical properties of the molded article were comprehensively evaluated as below. The mechanical properties graded A or B were regarded as being favorable.

A: The molded article is graded A in both the bending test and tensile test.
B: The molded article is graded A in one of the bending test and the tensile test and graded B in the other.
B: The molded article is graded B in one of the bending test and the tensile test and graded B or C in the other.
D: The molded article is graded C in both the bending test and tensile test.

(3-Point bending test)

Twelve sheets of test pieces having a width of 25 mm, a length of 100 mm, and a thickness of about 2 mm were cut out of a 2 mm thick molding plate obtained by the flat plate molding method. By using an all-purpose tester (manufactured by Instron, INSTRON 5965), bending strength, a flexural modulus, and bending elongation at break were measured, and the average of the 12 sheets was determined. The test was carried out according to JIS K 7017.
The measurement was performed under the conditions of a crosshead speed of 1 mm/min and a span length equal to the thickness of the molding plate x 16. The evaluation standard was as follows.

A: The bending strength is 450 MPa or higher, and the flexural modulus is 30 GPa or higher.
B: The bending strength is 350 or higher and less than 450 MPa, and the flexural modulus is 25 GPa or higher and less than 30 GPa.
C: The bending strength is 350 GPa or less, and the flexural modulus is 25 GPa or less.

(Tensile test)

Six sheets of test pieces having a width of 25 mm, a length of 250 mm, and a thickness of about 2 mm were cut out of a 2 mm thick molding plate obtained by the flat plate molding method. By using an all-purpose tester (manufactured by Instron, INSTRON 4482), tensile strength and a tensile modulus were measured, and the average of the 6 sheets was determined. The test was carried out according to JIS K 7164.
Evaluation conditions: span length: 150 mm, strain gauge KFGS-20-120-C1-11L1M2R (gauge length: 20 mm), data recording device: KYOWA EDX100A, crosshead speed: 2 mm/min. The evaluation standard was as follows.

A: The tensile strength is 300 MPa or higher, and the tensile modulus is 35 GPa or higher.
B: The tensile strength is 250 or higher and less than 300 MPa, and the tensile modulus is 30 GPa or higher and less than 35 GPa.
C: The tensile strength is 250 GPa or less, and the tensile modulus is 30 GPa or less.

(Heat resistance)

The 2 mm thick molded article obtained by the flat plate molding method was cut into a 55 mm (length) x 12.5 mm (width) test piece and measured at a measurement frequency of 1 Hz and a heating rate of 5 °C/min by using a rheometer (TA Instrument, Inc., ARES-RDA). The peak top of tan$\delta$ (tan$\delta$max) was adopted as a glass transition point. Heat resistance was evaluated according to the following standard. The heat resistance graded A or B was regarded as being favorable.

A: tan $\delta$max is 160 °C or higher.
B: tan $\delta$max is 140 °C or higher and lower than 160 °C.
C: tan $\delta$max is 120 °C or higher and lower than 140 °C.
D: tan $\delta$max is lower than 120 °C.

<Manufacturing and evaluation of thermosetting resin composition>

(Examples 1 to 19)

The component (B) was dissolved in advance in the component (D) according to the mixing amount described in Tables 1 to 4, thereby preparing a mixture of the component (B) and the component (D). Then, at room temperature, the mixture of the component (B) and the component (D), the component (A), and the component (C) were mixed together according to the mixing amount described in Tables 1 to 4. The mixture was uniformly stirred using a planetary stirring·deaerator MAZERUSTAR (manufactured by KURABO INDUSTRIES LTD.), thereby obtaining a uniform thermosetting resin precursor. Here, as the component (C), the MB prepared in advance according to the above description was used. The resin viscosity of the obtained thermosetting resin precursor of each example was measured. The results are shown in Tables 5 to 8.

Then, the thermosetting resin precursor was left to stand at 25 °C for 168 hours or 240 hours so that the reaction of the component (A), the component (B), and the component (D) was accelerated, thereby obtaining a thermosetting resin composition of each example. In Example 1, the aging period was set to 10 days (240 hours). In Examples 2 to 19, the aging period was set to 7 days (168 hours).

An aged viscosity, a melt viscosity, a minimum viscosity, and a curing start temperature of the thermosetting resin composition of each example were measured, and the handleability of the thermosetting resin composition was evaluated. The results are shown in Tables 5 to 8.

(Comparative Examples 1 to 4)

Thermosetting resin precursors of Comparative Examples 1 to 4 were obtained in the same manner as in Examples 1 to 19, except that the component (A), the component (C), and the component (D) were mixed together at room temperature according to the mixing amount described in Table 1. In Comparative Example 4 in which ARUFON UG-4040 was used as the component (A), ARUFON UG-4040 was used after being heated and dissolved in advance together with jER828 at 100 °C. The resin viscosity of the obtained thermosetting resin precursor of each example was measured. The results are described in Table 5.

Then, the thermosetting resin precursor was left to stand at 25 °C for 168 hours or 240 hours so that the reaction of the component (A) and the component (D) was accelerated, thereby obtaining a thermosetting resin composition of each comparative example.

An aged viscosity, a melt viscosity, a minimum viscosity, and a curing start temperature of the thermosetting resin composition of each comparative example were measured, and the handleability of the thermosetting resin composition was evaluated. The results are shown in Table 5. In Comparative Example 1, the tackiness of the thermosetting resin composition was evaluated as B. Therefore, only the aged viscosity of the thermosetting resin composition was measured, and the melt viscosity, the minimum viscosity, and the curing start temperature were not measured.

[Table 1]

| | | | Comparative Example 1 | Comparative Example 2 | Comparative Example 3 | Comparative Example 4 | Example 1 | Example 2 |
|---|---|---|---|---|---|---|---|---|
| Epoxy resin component (E) | Component (A) | jER828 | 95 | 95 | 95 | 90 | 100 | 95 |
| | | TETRAD-X | 5 | 5 | 5 | 5 | 0 | 5 |
| | | YED216M | - | - | - | - | - | 5 |
| | | ARUFON UG-4040 | - | - | - | 5 | - | - |
| | Mixture of component (B) and component (D) | Total amount | 10.5 | 12.5 | 14.5 | 12.5 | 13.8 | 13.1 |
| | | Component (D) HN-2200 | 10.5 | 12.5 | 14.5 | 12.5 | 11.0 | 11.1 |
| | | Component (B) SMA1000 | - | - | - | - | 2.8 | 2.0 |
| | | Component (B) SMA3000 | - | - | - | - | - | - |
| | | Component (B) SMAEF60 | - | - | - | - | - | - |
| Component (C.) | 2MZA-PW | | 5 | 5 | 5 | 5 | 5 | 5 |
| | DICYANEX1400F | | 1 | 1 | 1 | 1 | 1 | 1 |
| Gram equivalent number ratio | (Gram equivalent number of acid group in component (B))/ (Gram equivalent number of epoxy group in component (A)) | | 0 | 0 | 0 | 0 | 0.043 | 0.030 |
| | (Total gram equivalent number of acid group in component (B) and component (D))/(Gram equivalent number of epoxy group in component (A)) | | 0.226 | 0.269 | 0.312 | 0.277 | 0.291 | 0.269 |
| Epoxy equivalent | Epoxy equivalent of component (A) (g/eq) | | 178.6 | 178.6 | 178.6 | 183.9 | 186.0 | 178.6 |
| | Epoxy equivalent of epoxy resin component (E) (g/eq) | | 255.0 | 274.9 | 297.3 | 286.0 | 298.4 | 276.5 |
| (Epoxy equivalent of component (A))/(Epoxy equivalent of epoxy resin component (E)) | | | 0.70 | 0.65 | 0.60 | 0.64 | 0.62 | 0.65 |

EP 3 868 815 A1

[Table 2]

| | | | | Example 3 | Example 4 | Example 5 | Example 6 | Example 7 | Example 8 |
|---|---|---|---|---|---|---|---|---|---|
| Epoxy resin component (E) | Component (A) | jER828 | | 95 | 95 | 95 | 95 | 95 | 90 |
| | | TETRAD-X | | 5 | 5 | 5 | 5 | 5 | 5 |
| | | YED216M | | - | - | - | - | - | 5 |
| | | ARUFON UG-4040 | | - | - | - | - | - | - |
| | Mixture of component (B) and component (D) | Total amount | | 11.8 | 12.3 | 12.8 | 13.3 | 13.8 | 13.8 |
| | | Component (D) | HN-2200 | 9.4 | 9.8 | 10.2 | 10.6 | 11.0 | 11.0 |
| | | Component (B) | SMA 1000 | 2.4 | 2.5 | 2.6 | 2.7 | 2.8 | 2.8 |
| | | | SMA3000 | - | - | - | - | - | - |
| | | | SMAEF60 | - | - | - | - | - | - |
| Component (C) | 2MZA-PW | | | 5 | 5 | 5 | 5 | 5 | 5 |
| | DICYANEX1400F | | | 1 | 1 | 1 | 1 | 1 | 1 |
| Gram equivalent number ratio | (Gram equivalent number of acid group in component (B))/( Gram equivalent number of epoxy group in component (A)) | | | 0.035 | 0.037 | 0.038 | 0.040 | 0.041 | 0.041 |
| | (Total gram equivalent number of acid group in component (B) and component (D))/( Gram equivalent number of epoxy group in component (A)) | | | 0.239 | 0.249 | 0.259 | 0.269 | 0.279 | 0.276 |
| Epoxy equivalent | Epoxy equivalent of component (A) (g/eq) | | | 178.6 | 178.6 | 178.6 | 178.6 | 178.6 | 176.6 |
| | Epoxy equivalent of epoxy resin component (E) (g/eq) | | | 262.3 | 267.0 | 271.9 | 276.9 | 282.0 | 277.6 |
| (Epoxy equivalent of component (A))/(Epoxy equivalent of epoxy resin component (E)) | | | | 0.68 | 0.67 | 0.66 | 0.65 | 0.63 | 0.64 |

[Table 3]

| | | | | Example 9 | Example 10 | Example 11 | Example 12 | Example 13 | Example 14 |
|---|---|---|---|---|---|---|---|---|---|
| Epoxy resin component (E) | Component (A) | jER828 | | 90 | 95 | 95 | 95 | 95 | 95 |
| | | TETRAD-X | | 5 | 5 | 5 | 5 | 5 | 5 |
| | | YED216M | | 5 | - | - | - | - | - |
| | | ARUFON UG-4040 | | - | - | - | - | - | - |
| | Mixture of component (B) and component (D) | Total amount | | 14.3 | 13.2 | 13.7 | 14.2 | 14.7 | 13.6 |
| | | Component (D) | HN-2200 | 11.4 | 11.9 | 11.0 | 11.4 | 11.8 | 11.6 |
| | | Component (B) | SMA1000 | 2.9 | - | - | - | - | - |
| | | | SMA3000 | - | 1.3 | 2.7 | 2.8 | 2.9 | 2.0 |
| | | | SMAEF60 | - | - | - | - | - | - |
| Component (C) | 2MZA-PW | | | 5 | 5 | 5 | 5 | 5 | 5 |
| | DICYANEX1400F | | | 1 | 1 | 1 | 1 | 1 | 1 |
| Gram equivalent number ratio | (Gram equivalent number of acid group in component (B))/(Gram equivalent number of epoxy group in component (A)) | | | 0.042 | 0.012 | 0.024 | 0.025 | 0.026 | 0.018 |
| | (Total gram equivalent number of acid group in component (B) and component (D))/( Gram equivalent number of epoxy group in component (A)) | | | 0.286 | 0.267 | 0.260 | 0.270 | 0.279 | 0.267 |
| Epoxy equivalent | Epoxy equivalent of component (A) (g/eq) | | | 176.6 | 178.6 | 178.6 | 178.6 | 178.6 | 178.6 |
| | Epoxy equivalent of epoxy resin component (E) (g/eq) | | | 282.7 | 276.1 | 274.6 | 279.4 | 284.3 | 276.9 |
| (Epoxy equivalent of component (A))/(Epoxy equivalent of epoxy resin component (E)) | | | | 0.62 | 0.65 | 0.65 | 0.64 | 0.63 | 0.65 |

EP 3 868 815 A1

[Table 4]

| | | | | Example 15 | Example 16 | Example 17 | Example 18 | Example 19 |
|---|---|---|---|---|---|---|---|---|
| Epoxy resin component (E) | Component (A) | | jER828 | 95 | 95 | 95 | 95 | 95 |
| | | | TETRAD-X | 5 | 5 | 5 | 5 | 5 |
| | | | YED216M | - | - | - | - | - |
| | | | ARUFON UG-4040 | - | - | - | - | - |
| | Mixture of component (B) and component (D) | Total amount | | 13.6 | 14.1 | 14.3 | 14.8 | 15.3 |
| | | Component (D) | HN-2200 | 12.2 | 12.0 | 11.4 | 11.8 | 12.2 |
| | | Component (B) | SMA1000 | - | - | - | - | - |
| | | | SMA3000 | - | - | - | - | - |
| | | | SMAEF60 | 1.4 | 2.1 | 2.9 | 3.0 | 3.1 |
| Component (C) | 2MZA-PW | | | 5 | 5 | 5 | 5 | 5 |
| | DICYANEX1400F | | | 1 | 1 | 1 | 1 | 1 |
| Gram equivalent number ratio | (Gram equivalent number of acid group in component (B))/( Gram equivalent number of epoxy group in component (A)) | | | 0.007 | 0.010 | 0.014 | 0.015 | 0.015 |
| | (Total gram equivalent number of acid group in component (B) and component (D))/ ( Gram equivalent number of epoxy group in component (A)) | | | 0.270 | 0.268 | 0.260 | 0.269 | 0.279 |
| Epoxy equivalent | Epoxy equivalent of component (A) (g/eq) | | | 178.6 | 178.6 | 178.6 | 178.6 | 178.6 |
| | Epoxy equivalent of epoxy resin component (E) (g/eq) | | | 278.1 | 278.6 | 276.1 | 280.7 | 285.5 |
| (Epoxy equivalent of component (A))/(Epoxy equivalent of epoxy resin component (E)) | | | | 0.64 | 0.64 | 0.65 | 0.64 | 0.63 |

[Table 5]

| | | | Comparative Example 1 | Comparative Example 2 | Comparative Example 3 | Comparative Example 4 | Example 1 | Example 2 |
|---|---|---|---|---|---|---|---|---|
| Thermosetting resin precursor | Resin viscosity [Pa·s] | 25 °C | 5.0 | 4.4 | 4.4 | 6.0 | 4.3 | 6.3 |
| Thermosetting resin composition | Handleability | Tackiness | B | A | A | A | A | A |
| | | Hardness | - | A | B | B | A | A |
| | Aged viscosity [Pa·s] | 25 °C | < 5000 | 25,000 | 124,100 | 296,700 | 73,670 | 24,970 |
| | Melt viscosity [Pa·s] | 70 °C | - | 7.41 | 22.08 | 26.20 | 28.97 | 22.52 |
| | | 100 °C | - | 0.65 | 1.35 | 1.41 | 2.58 | 1.57 |
| | | Minimum viscosity | - | 0.33 | 0.57 | 0.53 | 0.98 | 0.63 |
| | Curing start temperature [°C] | | - | 117 | 119 | 120 | 119 | 118 |
| SMC | Handleability | Tackiness | - | A | - | - | A | - |
| | | Draping properties | - | A | - | - | A | - |
| | Reinforcing fiber filling properties | Burr percentage [% by mass] | - | C | - | - | B | - |
| | | Rib filling properties | - | B | - | - | A | - |
| Molded article | Mechanical properties | Bending strength [MPa] | - | 545 | - | - | 512 | - |
| | | Flexural modulus [GPa] | - | 30 | - | - | 32 | - |
| | | Tensile strength [MPa] | - | 278 | - | - | 274 | - |
| | | Tensile modulus [GPa] | - | 37 | - | - | 37 | - |
| | | Comprehensive evaluation | - | A | - | - | A | - |
| | Heat resistance | Tan$\delta$max [°C] | - | B | - | - | A | - |

[Table 6]

| | | | Example 3 | Example 4 | Example 5 | Example 6 | Example 7 | Example 8 |
|---|---|---|---|---|---|---|---|---|
| Thermosetting resin precursor | Resin viscosity [Pa·s] | 25 °C | 5.7 | 5.7 | 5.7 | 5.7 | 6.1 | 2.8 |
| Thermosetting resin composition | Handleability | Tackiness | A | A | A | A | A | A |
| | | Hardness | A | A | A | A | A | A |
| | Aged viscosity [Pa·s] | 25 °C | 17,030 | 21,380 | 24,970 | 52,180 | 64,110 | 11,780 |
| | Melt viscosity [Pa·s] | 70 °C | 21.22 | 22.70 | 24.87 | 46.90 | 62.90 | 47.38 |
| | | 100 °C | 1.53 | 2.08 | 2.57 | 2.98 | 5.53 | 4.35 |
| | | Minimum viscosity | 0.58 | 0.76 | 0.87 | 1.21 | 1.92 | 2.16 |
| | Curing start temperature [°C] | | 119 | 119 | 120 | 116 | 116 | 115 |
| SMC | Handleability | Tackiness | - | - | - | A | A | - |
| | | Draping properties | - | - | - | A | A | - |
| | Reinforcing fiber filling properties | Burr percentage [% by mass] | - | - | - | A | A | - |
| | | Rib filling properties | - | - | - | A | A | - |
| Molded article | Mechanical properties | Bending strength [MPa]. | - | - | - | 454 | 398 | - |
| | | Flexural modulus [GPa] | - | - | - | 30 | 28 | - |
| | | Tensile strength [MPa] | - | - | - | 271 | 266 | - |
| | | Tensile modulus [GPa] | - | - | - | 33 | 33 | - |
| | | Comprehensive evaluation | - | - | - | A | B | - |
| | Heat resistance | Tan$\delta$max [°C] | - | - | - | - | A | - |

[Table 7]

| | | | Example 9 | Example 10 | Example 11 | Example 12 | Example 13 | Example 14 |
|---|---|---|---|---|---|---|---|---|
| Thermosetting resin precursor | Resin viscosity [Pa·s] | 25 °C | 2.8 | 6.7 | 8.7 | 8.6 | 8.0 | 7.5 |
| Thermosetting resin composition | Handleability | Tackiness | A | A | A | A | A | A |
| | | Hardness | A | A | A | A | A | A |
| | Aged viscosity [Pa·s] | 25 °C | 27,620 | 38,730 | 46,480 | 60,590 | 75,180 | 40,020 |
| | Melt viscosity [Pa·s] | 70 °C | 62.07 | 16.50 | 41.45 | 56.06 | 82.11 | 27.42 |
| | | 100 °C | 4.37 | 1.17 | 2.65 | 3.68 | 6.93 | 1.71 |
| | | Minimum viscosity | 2.07 | 0.54 | 0.97 | 1.29 | 2.00 | 0.72 |
| | Curing start temperature [°C] | | 115 | 117 | 118 | 117 | 119 | 117 |

[Table 8]

| | | | Example 15 | Example 16 | Example 17 | Example 18 | Example 19 |
|---|---|---|---|---|---|---|---|
| Thermosetting resin precursor | Resin viscosity [Pa·s] | 25 °C | 5.4 | 6.4 | 7.2 | 8.4 | 7.8 |
| Thermosetting resin composition | Handleability | Tackiness | A | A | A | A | A |
| | | Hardness | A | A | A | A | A |
| | Aged viscosity [Pa·s] | 25 °C | 35,150 | 46,060 | 25,460 | 47,810 | 59,750 |
| | Melt viscosity [Pa·s] | 70 °C | 15.05 | 22.99 | 27.74 | 38.88 | 32.54 |
| | | 100 °C | 1.10 | 1.41 | 1.63 | 2.15 | 2.90 |
| | | Minimum viscosity | 0.47 | 0.57 | 0.62 | 0.77 | 0.91 |
| | Curing start temperature [°C] | | 119 | 119 | 119 | 120 | 120 |

In Example 1, a glycidyl amine-based epoxy resin was not used as the component (A), and a material obtained by copolymerizing styrene and maleic anhydride at a mass ratio of 1:1 was used as the component (B). Although the thermosetting resin precursor needed to be aged for 10 days, the results of tackiness and hardness evaluation of the thermosetting resin composition were favorable, and both the melt viscosity and minimum viscosity at 70 °C and 100 °C were favorable.

Examples 2 to 7 differ from Example 1 in that a glycidyl amine-based epoxy resin was also used as the component (A) and that the amount of the component (B) and the component (D) mixed together to form a mixture was increased or decreased. In Examples 2 to 7, the aging period was shortened to 7 days. In addition, the thermosetting resin composition was evaluated as being favorable in both the tackiness evaluation and hardness evaluation, and both the melt viscosity and minimum viscosity at 70 °C and 100 °C were favorable.

The results obtained from Examples 2 to 7 tell that in a case where a glycidyl amine-based epoxy is used as the component (A) in combination with other components, the aging period is shortened. Therefore, it can be said that in a case where the aging period needs to be shortened, it is effective use a glycidyl amine-based epoxy resin in combination with other components.

Examples 8 and 9 differ from Example 1 in that a glycidyl amine-based epoxy resin and an epoxy adduct of hexanediol were used in combination with other components as the component (A) and that the amount of the component (B) and the component (D) mixed together to form a mixture was increased or decreased. As in Examples 2 to 7, the aging period in Examples 8 and 9 was shortened to 7 days, in contrast to Example 1. In addition, the obtained thermosetting resin was evaluated as being favorable in both the tackiness evaluation and hardness evaluation, and both the melt viscosity and minimum viscosity at 70 °C and 100 °C were favorable.

The resin viscosity of the thermosetting resin precursors in Examples 8 and 9 was lower than the resin viscosity of the thermosetting resin precursors in Examples 2 to 7. Presumably, reinforcing fiber bundles will be impregnated better with the thermosetting resin precursors of Examples 8 to 9 than with the thermosetting resin precursors of Examples 2 to 7. In addition, it is anticipated that mechanical properties, particularly tensile properties, of molded articles obtained using the thermosetting resins of Examples 8 to 9 will be improved because the epoxy adduct of hexanediol expected to have high toughness is used in combination with other components.

Examples 10 to 14 differ from Example 1 in that a glycidyl amine-based epoxy resin was used in combination with other components as the component (A), a material obtained by copolymerizing styrene and maleic anhydride at a mass ratio of 3:1 was used as the component (B), and the amount of the component (B) and the component (D) mixed together to form a mixture was increased or decreased. As in Examples 2 to 9, the aging period in Examples 10 to 14 was shorter than in Example 1 at 7 days. In addition, the thermosetting resin composition was evaluated as being favorable in both the tackiness evaluation and hardness evaluation, and both the melt viscosity and minimum viscosity at 70 °C and 100 °C were favorable.

The results obtained from Examples 10 to 14 tell that in a case where the components of the component (B) contain a similar number of acid anhydride groups per molecule, it is preferable to use a material having a higher mass average molecular weight, because then the minimum values of the melt viscosity and minimum viscosity of the thermosetting resin at 70 °C and 100 °C are increased.

Examples 15 to 19 differ from Example 1 in that a glycidyl amine-based epoxy resin was used in combination with other components as the component (A), a material obtained by copolymerizing styrene and maleic anhydride at a mass ratio of 6:1 was used as the component (B), and the amount of the component (B) and the component (D) mixed together to form a mixture was increased or decreased. As in Examples 2 to 14, the aging period in Examples 15 to 19 was shorter than in Example 1 at 7 days. In addition, the obtained thermosetting resin was evaluated as being favorable in both the tackiness evaluation and hardness evaluation, and both the melt viscosity and minimum viscosity at 70 °C and 100 °C were favorable.

The results obtained from Examples 15 to 19 tell that in a case where the component (B) contains components having a relatively high mass average molecular weight, it is preferable that the number of acid anhydride groups per molecule of the component (B) be large, because then the minimum values of the melt viscosity and minimum viscosity of the thermosetting resin at 70 °C and 100 °C are increased.

In Comparative Examples 1 to 3, only the component (D) was used without using the component (B), and the amount of the component (D) added was increased or decreased. The thermosetting resin composition of Comparative Example 1 had a low aged viscosity, did not have appropriate tackiness, and lacked handleability. The thermosetting resin of Comparative Example 2 had appropriate tackiness and hardness. However, the melt viscosity and minimum viscosity of the thermosetting resin at 70 °C and 100 °C were lower than the standard, and the reinforcing fiber filling properties of the SMC were poor. The thermosetting resin of Comparative Example 3 had unfavorable hardness and insufficient handleability.

Comparative Example 4 differs from Comparative Examples 1 to 3 in that an acrylic polymer having epoxy groups was used as the component (A). The thermosetting resin of Comparative Example 4 had an extremely high aged viscosity and was evaluated as unfavorable in terms of hardness.

<Manufacturing and evaluation of SMC>

(Examples 1, 6, and 7 and Comparative Example 2)

Thermosetting resin precursors were manufactured at room temperature according to the mixing amount described in Tables 1 and 2. Then, by using a doctor blade, a first carrier film made of polyethylene was coated with the each of the precursors at 360 g/m². On the formed film of the thermosetting resin precursor, a carbon fiber bundle (manufactured by Mitsubishi Chemical Corporation, TR50S 3L) consisting of 3,000 filaments was cut to a length of 25 mm and scattered so that the basis weight of carbon fibers was substantially uniform at 1,080 g/m² and that the carbon fibers were arranged in random directions.

Furthermore, by using a doctor blade, a second carrier film made of polyethylene was coated with the same thermosetting resin precursor at a thickness of 360 g/m². Then, the first carrier film made of polyethylene and the second carrier film made of polyethylene were arranged so that the scattered carbon fiber bundles were interposed between the thermosetting resin precursors. Thereafter, the films were pressed by being passed between rolls so that the scattered carbon fiber bundles were impregnated with the thermosetting resin precursor, thereby obtaining an SMC precursor. Subsequently, the SMC precursor was left to stand at 25 °C for 7 to 10 days so that the component (A), the component (B), and the component (D) or the component (A) and the component (D) in the thermosetting resin precursor had a reaction, thereby obtaining an SMC containing a thermosetting resin composition. In Example 1, the aging period was set to 10 days. In Examples 6 and 7 and Comparative Example 2, the aging period was set to 7 days. For the obtained molded article, a burr percentage was measured. Furthermore, rib filling properties and heat resistance of the molded article were evaluated by performing a 3-point bending test and a tensile test. The results are shown in Tables 5 and 6.

The burr percentage was 4.5% by mass in Example 1, 3.2% by mass in Example 6, 2.3% by mass in Example 7, and 6.2% by mass in Comparative Example 2.

tan δmax was 162 °C in Example 1, 164 °C in Example 7, and 157 °C in Comparative Example 2.

All SMCs obtained in Examples 1, 6, and 7 and Comparative Example 2 had both the appropriate tackiness and appropriate draping properties and had favorable handleability.

By using the SMCs obtained in Examples 1, 6, and 7 and Comparative Example 2, a 2 mm thick molding plate was manufactured according to the flat plate molding method described above. At that time, a burr percentage was calculated, and rib filling properties were evaluated. The evaluation results are shown in Tables 5 and 6.

The molded articles of Examples 1, 6, and 7 had good mechanical properties and good heat resistance. Furthermore, both the burr percentage at the time of molding and the evaluation results of rib filling properties were favorable. These results show that the SMCs of Examples 1, 6, and 7 have good reinforcing fiber filling properties.

Regarding the molded article of Comparative Example 2, both the burr percentage at the time of molding and the evaluation result of rib filling properties were unfavorable.

These results show that in Comparative Example 2 obtained without using the component (B), because burrs were formed at a high quantity and rib filling properties were poor, the SMC had insufficient reinforcing fiber filling properties.

[Industrial Applicability]

The SMC of the present invention has good handleability and good reinforcing fiber filling properties. In the SMC of the present invention, reinforcing fiber bundles are sufficiently impregnated with a thermosetting resin composition. Furthermore, the SMC of the present invention has good handleability and good reinforcing fiber filling properties. Therefore, the SMC of the present invention is suitable as a press molding material having good productivity.

The molded article of the present invention has good mechanical properties and good heat resistance. The molded article of the present invention has good mechanical properties and good heat resistance, and is suitable as a material for structural parts for business use and automobiles.

**Claims**

1. A sheet molding compound comprising:

   a thermosetting resin composition; and
   reinforcing fiber bundles,
   wherein the thermosetting resin composition comprises an epoxy resin component (E) comprising a reaction product (1) of the following component (A) and the following component (B), and the following component (C),

   component (A): an epoxy resin staying in a liquid state at 25 °C,
   component (B): a polymer comprising a functional group reactive with the component (A), and
   component (C): an epoxy curing agent.

2. The sheet molding compound according to Claim 1,
   wherein an epoxy equivalent of the epoxy resin component (E) is 500 or less.

3. The sheet molding compound according to Claim 1 or 2,
   wherein a value obtained by dividing an epoxy equivalent of the component (A) by an epoxy equivalent of the epoxy resin component (E) is 0.5 to 0.95.

4. The sheet molding compound according to any one of Claims 1 to 3,
   wherein the functional group is an acid anhydride group.

5. The sheet molding compound according to any one of Claims 1 to 4,
   wherein an acid value of the component (B) is 100 to 700 mg KOH/g.

6. The sheet molding compound according to any one of Claims 1 to 5,
   wherein a mass average molecular weight of the component (B) is 1,000 to 15,000.

7. The sheet molding compound according to any one of Claims 1 to 6,
   wherein the component (B) comprises a copolymer comprising a vinyl compound-based unit, and an ethylenically unsaturated acid anhydride-based unit and having two or more acid anhydride groups per molecule.

8. The sheet molding compound according to Claim 7,
   wherein the component (B) is a styrene-maleic anhydride copolymer in which a ratio of the maleic anhydride to the styrene (maleic anhydride/styrene) is 1/8 to 1/1.

9. The sheet molding compound according to any one of Claims 1 to 8,
   wherein the epoxy resin component (E) further comprises a reaction product (2) of the component (A), the component (B), and the following component (D),
   component (D): a liquid monofunctional acid anhydride having one acid anhydride group in a molecule.

**10.** The sheet molding compound according to Claim 9,
wherein the component (D) is a compound capable of dissolving the component (B).

**11.** The sheet molding compound according to any one of Claims 1 to 10,
wherein a ratio of a gram equivalent number of acid groups in the component (B) to a gram equivalent number of epoxy groups in the component (A) is 0.005 to 0.08.

**12.** The sheet molding compound according to any one of Claims 9 to 11,
wherein a ratio of a total of gram equivalent number of acid groups in the component (B) and gram equivalent number of acid groups in the component (D) to a gram equivalent number of epoxy groups in the component (A) is 0.1 to 0.5.

**13.** A sheet molding compound comprising:

a thermosetting resin composition; and
reinforcing fiber bundles,
wherein, in a case where a curing start temperature of the thermosetting resin composition is 70 °C or higher and lower than 100 °C, the thermosetting resin composition satisfies the following requirements (i) and (ii), and in a case where a curing start temperature of the thermosetting resin composition is 100 °C or higher, the thermosetting resin composition satisfies the following requirements (i), (ii), and (iii),
requirement (i): an aged viscosity at 25 °C is 5,000 to 90,000 Pa·s,
requirement (ii): a melt viscosity at 70 °C is 15 Pa·s or higher, and
requirement (iii): a melt viscosity at 100 °C is 1 Pa·s or higher.

**14.** The sheet molding compound according to Claim 13,
wherein the thermosetting resin composition further satisfies the following requirement (iv),
requirement (iv): a minimum viscosity is 0.5 Pa·s or higher.

**15.** A molded article which is an article obtained by press-molding the sheet molding compound according to any one of Claims 1 to 14.

**INTERNATIONAL SEARCH REPORT**

| International application No. |
| --- |
| PCT/JP2019/039940 |

A. CLASSIFICATION OF SUBJECT MATTER
Int.Cl. C08J5/24(2006.01)i, C08G59/42(2006.01)i, C08K5/1539(2006.01)i,
C08K7/02(2006.01)i, C08L63/00(2006.01)i

According to International Patent Classification (IPC) or to both national classification and IPC

B. FIELDS SEARCHED

Minimum documentation searched (classification system followed by classification symbols)
Int.Cl. C08J5/24, C08G59/42, C08K5/1539, C08K7/02, C08L63/00

Documentation searched other than minimum documentation to the extent that such documents are included in the fields searched
Published examined utility model applications of Japan 1922–1996
Published unexamined utility model applications of Japan 1971–2019
Registered utility model specifications of Japan 1996–2019
Published registered utility model applications of Japan 1994–2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 8-301948 A (HITACHI CHEMICAL INDUSTRY CO., LTD.) 19 November 1996, claims, paragraphs [0009]–[0018], examples (Family: none) | 1-2, 4-8, 13-15 |
| X | JP 59-68321 A (MORTON-NORWICH PRODUCTS, INC.) 18 April 1984, claims, page 2, upper left column, line 10 to upper right column, line 16, page 4, upper right column, line 8 to the bottom line, page 5, lower right column, line 7 to page 8, upper left column, line 9, page 9, upper left column, line 17 to page 10, upper right column, line 6, examples & US 3997499 A claims, column 2, lines 9-23, column 2, line 60 to column 4, line 63, examples | 1-15 |

☒ Further documents are listed in the continuation of Box C.     ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 10 December 2019 (10.12.2019) | 17 December 2019 (17.12.2019) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | Telephone No. |

Form PCT/ISA/210 (second sheet) (January 2015)

<table>
<tr><td colspan="3" align="center">**INTERNATIONAL SEARCH REPORT**</td><td>International application No.<br>PCT/JP2019/039940</td></tr>
</table>

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2000-26574 A (KUK DO CHEMICAL CO., LTD.) 25 January 2000, entire text & KR 10-2000-0002411 A | 1-15 |
| A | JP 2016-121355 A (BLUE CUBE IP LLC) 07 July 2016, entire text (Family: none) | 1-15 |
| P, A | WO 2018/190329 A1 (MITSUBISHI CHEMICAL CORPORATION) 18 October 2018, entire text (Family: none) | 1-15 |
| P, A | WO 2019/026724 A1 (TORAY INDUSTRIES, INC.) 07 February 2019, entire text (Family: none) | 1-15 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018195255 A
- JP H288684 A
- JP 2004189811 A
- JP 2004043769 A
- JP 2001354788 A